# EUROPÄISCHE PATENTSCHRIFT

(11) **EP 2 185 643 B1**
(45) Veröffentlichungstag und Bekanntmachung des Hinweises auf die Patenterteilung: **01.02.2012**
(21) Anmeldenummer: 08787457.4
(22) Anmeldetag: 26.08.2008
(51) Int. Cl.: C08K 5/50, C08L 63/00

(54) **FLAMMHEMMENDE ADDITIVE**
FLAME-RETARDANT ADDITIVES
ADDITIFS IGNIFUGES

(30) Priorität: 05.09.2007 DE 102007041988
(43) Veröffentlichungstag der Anmeldung: 19.05.2010
(73) Patentinhaber: Henkel AG & Co. KGaA, 40589 Düsseldorf (DE)
(72) Erfinder: DÖRING, Manfred, 76744 Wörth (DE); ARNOLD, Ulrich, 76646 Bruchsal (DE); ROTH, Marcel, 40589 Düsseldorf (DE); BARRIAU, Emilie, 40597 Düsseldorf (DE); SCHMIDT-FREYTAG, Ulrike, 40227 Düsseldorf (DE); ALTSTÄDT, Volker, 21073 Hamburg (DE); FABRIS, Felipe Wolff, 95447 Bayreuth (DE)
(86) Internationale Anmeldenummer: PCT/EP2008/061105
(87) Internationale Veröffentlichungsnummer: WO 2009/030604

(56) Entgegenhaltungen:
- US-A- 4 069 055
- US-A1- 2004 122 208
- US-A1- 2004 166 241
- DATABASE WPI Week 200522 Thomson Scientific, London, GB; AN 2005-205434 XP002564640 & JP 2005 054060 A (HOKKO CHEM IND CO LTD) 3. März 2005 (2005-03-03)
- EMILIE BARRIAU?, ULRIKE SCHMIDT-FREYTAG?, MARCEL ROTH?, JOACHIM GEHRING?, NORBERT SIMON?, FELIPE WOLFF-FABRIS & CO.: "Silver Olefin Complexes: Highly Efficient Initiators for the Electron Beam Curing of Epoxy Resins" MACROMOLECULES, Nr. 41, 5. Oktober 2008 (2008-10-05), Seiten 3779-3781, XP002564639

## Beschreibung

Die vorliegende Erfindung betrifft eine härtbare Zubereitung, enthaltend ein Epoxidharzsystem, einen Initiator und mindestens ein Flammschutzmittel ausgewählt aus Verbindung der allgemeinen Formel KA, mit K = Mono-, Di-, Oligo- und/oder Polyphosphoniumkation und A = schwach-koordinierendes Anion und die Verwendung der Verbindungen der allgemeinen Formel KA als Flammschutzmittel für Harzsysteme.

Gestiegene Anforderungen an die Feuerfestigkeit von Materialien haben dazu geführt, dass durch den Zusatz von Flammschutzadditiven die Sicherheit vieler Materialien im Bezug auf ihre Brennfähigkeit entscheidend verbessert werden konnte.

So werden Phosphoniumsalze oder aus Phosphoniumsalzen gewonnene Reaktionsprodukte in vielen Bereichen der Technik als Flammschutzmittel eingesetzt. Flammschutzmittel auf Basis von Tetrakis(hydroxymethyl)-phosphoniumsalzen werden z.B. zur Flammhemmung von Cellulose, insbesondere zur Imprägnierung von Textilien (EP 595142 oder WO 8900217) und Holz (GB 2200363) eingesetzt.
Reaktionsprodukte dieser Salze mit Isocyanaten bzw. Alkylenoxiden finden als flammhemmende Additive für Polyurethane Verwendung (DE 10304344). Darüber hinaus sind Phosphoniumsalze als Flammschutzmittel für Polycarbonate (JP 2001288352) und als Bausteine für flammgehemmte Polyesterfasern beschrieben (JP 2000290834). Phosphoniumsalze wurden außerdem als Flammschutzmittel für Polyethylen, Polypropylen, Polyacrylsäure und Butadien/Acrylnitril-Acrylnitril/Styrol-Copolymere beschrieben (US 3309425 von Gillham et al.).

In Epoxidharzsystemen ist ein übliches flammhemmendes System eine Kombination aus bromhaltigen Flammhemmern und Antimonoxid-Flammhemmer-Synergisten. Diese Verbindungen sind jedoch Umweltschadstoffe. Antimonoxid ist besonders im Hinblick auf seine partielle Wasserlöslichkeit problematisch. Neben Melamincyanurat werden weiterhin auch phosphorhaltige Verbindungen als flammhemmende Verbindungen den jeweiligen Epoxidharzsystemen zugesetzt.

Zum Beispiel offenbart das US-Patent Nr. 5 739 187 von Asano et al.
Epoxidharzzusammensetzungen als Halbleitereinkapselungsmittel, die einen phosphorhaltigen Flammhemmer enthalten, um so die Verwendung von Antimontrioxid und bromierten Verbindungen zu vermeiden.

Phosphoniumsalze als Additive werden in den US-Patentanmeldungen Nr. 2004/0166241 von Gallo et al. und Nr. 2004/0217376 von Ahsan et al. beschrieben. Beide beanspruchen eine Epoxidharzzusammensetzung, umfassend ein Epoxidharzsystem, einen geeigneten Initiator, ein Flammschutzmittel, vorzugsweise enthaltend Melamincyanurat und ein quaternäres Organophosphoniumsalz. Dabei wird dem quaternären Organophosphoniumsalz in Kombination mit dem Flammschutzmittel und dem Initiator ein synergistischer Effekt zugeschrieben, indem das Salz sowohl die Aushärtgeschwindigkeit als auch die Flammschutzeigenschaften des Harzes positiv beeinflusst. In jedem Fall wird aber ein zusätzliches Flammschutzmittel benötigt und die Härtung der Epoxidharzzusammensetzung erfolgt thermisch, in der Regel durch anionische Polymerisation.
Die eingesetzten quaternären Organophosphoniumsalzkationen zeichnen sich weiterhin dadurch aus, dass das jeweilige Gegenion ausgewählt wird aus der Gruppe der nucleophilen Halogenid-, Acetat- oder Phosphat-Anionen.

Weiterhin ist aus der JP-Patentanmeldung Nr. 2004083835 die Verwendung von Phosphoniumsalzen mit schwach-koordinierenden Anionen als latente Polymerisationskatalysatoren in thermisch-härtbaren Harzsytemen bekannt.

Werden Epoxidharze durch anionische Polymerisation oder Polyaddition gehärtet, so stellt die Anwesenheit herkömmlicher Flammschutzadditive, beispielsweise der Flammschutzadditive auf Basis von Organophosphoniumsalzen meist kein Problem dar. Häufig weisen die Anionen dieser Additive (z.B. Halogenide, Acetate oder Phosphate) jedoch eine ausgeprägte Nucleophilie bzw. Basizität auf und inhibieren so kationische Polymerisationsprozesse. Sie sind daher in der nicht-thermischen Härtung, also z.B. in der Strahlungshärtung von Epoxidharzen, die meist einem kationischen Mechanismus folgt, nicht einsetzbar, da die Harze in ihrer Anwesenheit nicht oder nur unvollständig vernetzen. Auch andere Flammschutzadditive, wie z.B. Melamincyanurat sind mit einem kationisch polymerisierenden Epoxidharzsystem nicht kompatibel.

Ziel der vorliegenden Erfindung war daher die Bereitstellung effizienter Flammschutzmittel für nicht-thermisch härtende Harzsysteme, da für diese Art der Härtung keine kompatiblen und wirksamen Flammschutzmittel zur Verfügung standen. Um eine ausreichende flammhemmende Wirkung zu erreichen, müssen Flammschutzmittel häufig in Mengen zugesetzt werden, die zu einer Verschlechterung der Materialparameter führen. Ein weiteres Ziel der Erfindung war es daher die benötigten Additivmengen möglichst gering zu halten, um eine negative Beeinflussung der Materialeigenschaften zu verhindern.

Überraschenderweise wurde nun gefunden, dass Mono-, Di-, Oligo- oder Polyphosphoniumkationen mit schwach-koordinierenden Anionen als Gegenionen hocheffiziente Flammschutzmittel für Harzsysteme darstellen. Aufgrund der sterisch anspruchsvollen und wenig nucleophilen Anionen eignen sich diese Flammschutzmittel beispielsweise auch für nicht-thermisch härtende Epoxidharzsysteme, da sie den Polymerisationsvorgang nicht negativ beeinflussen und so eine vollständige Aushärtung des Harzsystems, etwa bei der nach einem kationischen Mechanismus ablaufenden Strahlungshärtung, erlauben.

Gegenstand der vorliegenden Erfindung ist daher die Verwendung mindestens einer Verbindung der allgemeinen Formel (I),

KA (I)

mit K = Mono-, Di-, Oligo- oder Polyphosphoniumkation und A = schwach-koordinierendes Anion, wobei das schwach-koordinierende Anion A ausgewählt wird aus Hexafluoroantimonat (SbF₆⁻), Hexafluorophosphat (PF₆⁻), Bortetrafluorid (BF₄⁻), Hexafluoroaluminat (AlF₆³⁻), Trifluormethansulfonat (CF₃SO₃⁻), Hexafluoroarsenat (AsF₆⁻), Tetrakis(pentafluorphenylborat) (B[C₆F₅]₄⁻), Tetrakis[3,5-bis(trifluormethyl)phenyl]borat (B[C₆H₃(CF₃)₂]₄⁻), Tetraphenylborat (B[C₆H₅]₄⁻), Hexafluorotitanat (TiF₆²⁻), Pentachlorotitanat (TlCl₅⁻), Pentachlorostannat (SnCl₅⁻), Hexafluorogermanat (GeF₆²⁻), Hexafluorosilicat (SiF₆²⁻), Hexafluoronickelat (NiF₆²⁻) oder Hexafluorozirkonat (ZrF₆²⁻) als Flammschutzmittel für Harzsysteme.

Unter "Harzsysteme" im Sinne der Erfindung sind vorzugsweise Harzsysteme ausgewählt aus der Gruppe der Epoxidharzsysteme, Benzoxazinsysteme, Polyurethan-Systeme, Acrylatharzsysteme, Epoxyacrylatharzsysteme, Cyanacrylatharzsysteme, Triazinharzsysteme, Polyimidharzsysteme, Esteracrylatharzsysteme und/oder thermoplastische Harzsysteme oder deren beliebige Mischungen zu verstehen. Besonders bevorzugt sind nicht-thermisch härtende Harzsysteme, ganz besonders bevorzugt nicht-thermisch härtende Epoxidharzsysteme, die im Sinne der Erfindung auch als kationisch härtende Epoxidharzsysteme angesehen werden können.

Unter schwach-koordinierenden Anionen im Sinne der Erfindung sind vorzugsweise Anionen zu verstehen, die aufgrund ihrer chemischen Struktur wenig basische und kaum nucleophile Eigenschaften besitzen. Ohne die Verwendung von schwach-koordinierenden Anionen als Gegenionen kommt es in der Regel zu keiner oder keiner vollständigen Aushärtung des jeweiligen Harzsystems, da andere Gegenionen, wie beispielsweise Halogenide, vor allem bei kationisch härtenden Harzsystemen den Polymerisationsvorgang inhibieren oder entscheidend verlangsamen.

Ein weiterer Gegenstand der vorliegenden Erfindung ist eine härtbare Zubereitung enthaltend
a) ein Epoxidharzsystem,
b) einen Initiator ausgewählt aus den folgenden Verbindungen oder deren Mischungen:
   i) Verbindungen der allgemeinen Formel (XV),

      {[M(L)ₐ]A_{b}}_{c} (XV),

      mit M = Metallkation, L = Ligand, A = schwach-koordinierendes Anion, a = 1 bis 10, bevorzugt 1 bis 6, besonders bevorzugt 1 bis 4, b = 1 bis 10, bevorzugt 1 bis 6, besonders bevorzugt 1 bis 3 und c = 1 bis 20000000, bevorzugt 1 bis 20000, besonders bevorzugt 1 bis 1000, ganz besonders bevorzugt 1 bis 500, insbesondere 1 bis 300, wobei a, b und c ganze Zahlen und Zahlenbereiche darstellen können und a zusätzlich auch nicht ganze Zahlen darstellen kann,
   ii) Verbindungen der allgemeinen Formel (XVI),

      IA (XVI)

      mit I = Diaryliodoniumsalz und A = schwach-koordinierendes Anion oder
   iii) Verbindungen der allgemeinen Formel (XVII),

      SA (XVII)

      mit S = Triarylsulfoniumsalz und A = schwach-koordinierendes Anion und
c) mindestens ein Flammschutzmittel der allgemeinen Formel (I)

   KA (I),

   mit K = Mono-, Di-, Oligo- und Polyphosphoniumkation und A = schwach-koordinierendes Anion,
wobei das schwach-koordinierende Anion A des Initiators und des Flammschutzmittels ausgewählt wird aus Hexafluoroantimonat (SbF₆⁻), Hexafluorophosphat (PF₆⁻), Bortetrafluorid (BF₄⁻), Hexafluoroaluminat (AlF₆³⁻), Trifluormethansulfonat (CF₃SO₃⁻), Hexafluoroarsenat (AsF₆⁻), Tetrakis(pentafluorphenylborat) (B[C₆F₅]₄⁻), Tetrakis[3.5-bis(trifluormethyl)phenyl]borat (B[C₆H₃(CF₃)₂]₄⁻), Tetraphenylborat (B[C₆H₅]₄⁻), Hexafluorotitanat (TiF₆²⁻), Pentachlorotitanat (TlCl₅⁻), Pentachlorostannat (SnCl₅⁻), Hexafluorogermanat (GeF₆²⁻), Hexafluorosilicat (SiFₑ²⁻), Hexafluoronickelat (NiF₆²⁻) oder Hexafluorozirkonat (ZrF₆²⁻).

Unter einem □ Epoxidharzsystem□ wird im Rahmen der vorliegenden Erfindung-eine Harz Zusammensetzung verstanden, die auf der Basis von Epoxidverbindungen oder epoxidhaltigen Verbindungen gebildet wird.

a, b, und c in Formel (XV) können erfindungsgemäß sowohl ganze Zahlen als auch Zahlenbereiche darstellen und a kann zusätzlich auch nicht ganze Zahlen darstellen. Insbesondere bevorzugt ist a ein Zahlenbereich von 1 bis 6, besonders bevorzugt von 1 bis 4. Weiterhin bevorzugt ist a = 1, 1.5, 2, 3 oder 4, ganz besonders bevorzugt 1, 1.5 oder 2.

Insbesondere bevorzugt ist b ein Zahlenbereich von 1 bis 6, besonders bevorzugt von 1 bis 3. Weiterhin bevorzugt ist b = 1, 2, 3 oder 4, ganz besonders bevorzugt 1, 2 oder 3.

c ist bevorzugt entweder 1 (monomerer Metallkomplex) oder liegt bevorzugt in einem Bereich von 1 bis 20000000 (monomere, dimere, trimere, oligomere und polymere Koordinationsverbindungen oder Gemische aus diesen), beispielsweise bevorzugt 1 bis 20000, besonders bevorzugt 1 bis 1000, ganz besonders bevorzugt 1 bis 500 oder 1 bis 300.
Insbesondere bevorzugt ist für c jedoch ein Zahlenbereich zwischen 1 bis 20000000.

Ein weiterer Gegenstand der vorliegenden Erfindung ist die Verwendung der erfindungsgemäßen Zubereitung als Klebstoff, Komposit-Material, Dichtungsmasse, Werkstoff und/oder zur Beschichtung von Oberflächen.

Ebenfalls Gegenstand der vorliegenden Erfindung ist ein Verfahren zur Aushärtung der erfindungsgemäßen Zubereitung, umfassend die Schritte
a. Bereitstellung einer härtbaren Zubereitung,
b. Bestrahlung der besagten Zubereitung mit Strahlung, welche ausreicht, um die besagte Zubereitung auszuhärten
und das gehärtete Produkt als solches, das durch nicht-thermisches Härten der erfindungsgemäßen Zubereitung, vorzugsweise nach dem oben genannten Verfahren, erhalten wird.

Flammschutzmittel im Sinne der vorliegenden Erfindung bestehen aus Mono-, Di-, Oligo- und/oder Polyphosphoniumkationen und den oben genannten schwach-koordinierenden Anionen.

In einer bevorzugten Ausführungsform des Flammschutzmittels wird das Monophosphoniumkation ausgewählt aus Verbindungen der allgemeinen 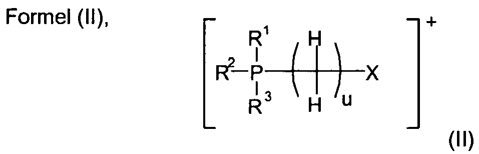 wobei u eine ganze Zahl zwischen 0 und 18 ist, R¹, R² und R³ unabhängig voneinander für eine substituierte oder unsubstituierte C₁₋₁₂- Alkyl-, Cycloalkyl-, Alkenyl-, Alkinyl-, Arylalkyl- oder Arylgruppe, insbesondere eine C₆₋₁₀-Arylgruppe, stehen und X für eine C₁₋₁₂-Alkyl-, Alkenyl-, Cycloalkyl-, Arylalkyl-, Aryl-, Carbonsäure- oder Carbonsäureestergruppe oder eine Gruppe der allgemeinen Formel R⁴C=O, mit R⁴ = substituierte oder unsubstituierte C₁₋₁₂- Alkyl-, Cycloalkyl-, Arylalkyl- oder Arylgruppe, steht.

Vorzugsweise ist u = 0, 1, 2 oder 3, insbesondere 1 und/oder R¹, R² und R³ stehen für eine substituierte oder unsubstituierte Phenylgruppe. In einer ganz besonders bevorzugten Ausführungsform ist R¹ = R² = R³ = Phenyl und X steht für eine substituierte oder unsubstituierte Vinylgruppe, Alkylestergruppe oder Acylgruppe der allgemeinen Formel R⁴(C=O)-, mit R⁴ = Phenyl.

In einer anderen bevorzugten Ausführungsform des Flammschutzmittels wird das Diphosphoniumkation ausgewählt aus Verbindungen der allgemeinen 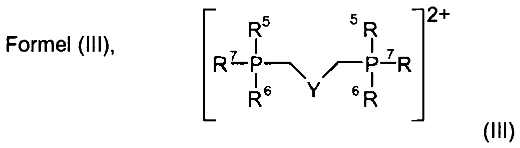 wobei R⁵ und R⁶ unabhängig voneinander für eine substituierte oder unsubstituierte C₁₋₁₂- Alkyl-, Cycloalkyl-, Alkenyl-, Alkinyl-, Arylalkyl- oder Arylgruppe, insbesondere eine C₆₋₁₀-Arylgruppe stehen, R⁷ für eine substituierte oder unsubstituierte C₁₋₁₂- Alkyl-, Cycloalkyl-, Alkenyl-, Alkinyl-, Arylalkyl- oder Arylgruppe oder für eine Struktur der allgemeinen Formel R⁸C=O(CH₂)ᵤ-, mit u' = 1 bis 10 und R⁸ = substituierte oder unsubstituierte C₁₋₁₂- Alkyl-, Cycloalkyl-, Arylalkyl- oder Arylgruppe, steht und Y für eine kovalente Bindung oder eine substituierte oder unsubstituierte C₁₋₁₂- Alkylen-, Cycloalkylen-, Alkenylen-, Arylalkylen- oder Arylengruppe steht.

Vorzugsweise stehen R⁵ und R⁶ für eine substituierte oder unsubstituierte Phenylgruppe. In einer ganz besonders bevorzugten Ausführungsform der Erfindung ist R⁵ = R⁶ = Phenyl und/oder Y steht für eine kovalente Bindung oder eine para-Phenylengruppe. In einer weiterhin bevorzugten Ausführungsform der Erfindung ist R⁷ eine substituierte oder unsubstituierte Phenylgruppe oder R⁷ steht für eine Gruppe der allgemeinen Formel R⁸C=O(CH₂)⁻ᵤ, wobei u vorzugsweise 1, 2 oder 3, insbesondere 1 ist und/oder R⁸ für eine Phenylgruppe steht.

In einer weiteren bevorzugten Ausführungsform des Flammschutzmittels wird das Oligo- oder Polyphosphoniumkation ausgewählt aus Verbindungen der allgemeinen 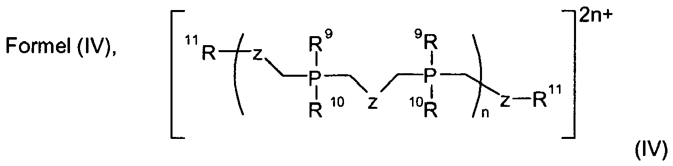 wobei n eine ganze Zahl zwischen 1 und 20000000 ist, R⁹ und R¹⁰ unabhängig voneinander für eine substituierte oder unsubstituierte C₁₋₁₂- Alkyl-, Cycloalkyl-, Alkenyl-, Alkinyl-, Arylalkyl- oder Arylgruppe, insbesondere eine C₆₋₁₀-Arylgruppe stehen, z für eine kovalente Bindung oder eine substituierte oder unsubstituierte C₁₋₁₂- Alkylen-, Cycloalkylen-, Alkenylen-, Arylalkylen- oder Arylengruppe steht und R¹¹ für eine Struktur der allgemeinen Formel (R¹²)₃P(CH₂)ⱼ- mit j = 0 bis 10 und R¹² = substituierte oder unsubstituierte C₁₋₁₂- Alkyl-, Cycloalkyl-, Arylalkyl- oder Arylgruppe, insbesondere eine C₆₋₁₀-Arylgruppe, steht.

Vorzugsweise steht n für eine ganze Zahl zwischen 1 und 1000000, besonders bevorzugt zwischen 1 und 100000 und ganz besonders bevorzugt zwischen 1 und 10000, zwischen 1 und 1000, zwischen 1 und 300, zwischen 1 und 100 und insbesondere zwischen 1 und 10. In einer weiteren bevorzugten Ausführungsform der Erfindung stehen R⁹ und R¹⁰ für eine substituierte oder unsubstituierte Phenylgruppe. In einer ganz besonders bevorzugten Ausführungsform der Erfindung ist R⁹ = R¹⁰ = Phenyl und/oder z steht für eine kovalente Bindung oder eine para-Phenylengruppe.
In einer weiterhin bevorzugten Ausführungsform der Erfindung steht R¹¹ für eine Struktur der allgemeinen Formel (R¹²)₃P(CH₂)ⱼ-, wobei j vorzugsweise 0, 1, 2 oder 3 ist, insbesondere 1 ist und/oder R¹² für eine substituierte oder unsubstituierte Phenylgruppe steht.

Der Ausdruck "substituiert" bedeutet im Sinne der vorliegenden Erfindung, dass der jeweilige Rest mindestens einen, vorzugsweise ein, zwei oder drei Substituenten tragen kann.

Die Substituenten können erfindungsgemäß insbesondere ausgewählt sein aus Alkyl, insbesondere C₁₋₂₂-Alkyl, vorzugsweise C₁₋₁₈-Alkyl, Trifluormethyl, Cycloalkyl, insbesondere C₃₋₈-Cycloalkyl, Cycloalkylalkyl, insbesondere C₃₋₈-Cycloalkyl-C₁₋₁₂-alkyl, Alkenyl, insbesondere C₂₋₁₈-Alkenyl, Alkinyl, insbesondere C₂₋₁₈-Alkinyl, Heteroalkyl, Heterocycloalkyl, Alkoxy, insbesondere C₁₋₁₈-Alkoxy, Alkylsulfanyl, insbesondere C₁₋₁₈-Alkylsulfanyl, Alkylsulfinyl, insbesondere C₁₋₁₈-Alkylsulfinyl, Alkylsulfonyl, insbesondere C₁₋₁₈-Alkylsulfonyl, Alkanoyl, insbesondere C₁₋₁₈-Alkanoyl, Alkanoyloxy, insbesondere C₁₋₁₈-Alkanoyloxy, Alkoxycarbonyl, insbesondere C₁₋₁₈-Alkoxycarbonyl, Alkylaminocarbonyl, insbesondere C₁₋₁₈-Alkylaminocarbonyl, Alkylsulfanylcarbonyl, insbesondere C₁₋₁₈-Alkylsulfanylcarbonyl, Hydroxy, Amino, Aryl, insbesondere C₆₋₁₀-Aryl, Arylalkyl, insbesondere C₆₋₁₀-Aryl-C₁₋₁₂-alkyl, Aryloxy, insbesondere C₆₋₁₀-Aryloxy, Arylsulfanyl, insbesondere C₆₋₁₀-Arylsulfanyl, Arylsulfinyl, insbesondere C₆₋₁₀-Arylsulfinyl, Arylsulfonyl, insbesondere C₆₋₁₀-Arylsulfonyl, Arylcarbonyl, insbesondere C₆₋₁₀-Arylcarbonyl, Arylcarbonyloxy, insbesondere C₆₋₁₀-Arylcarbonyloxy, Aryloxycarbonyl, insbesondere C₆₋₁₀-Aryloxycarbonyl, Arylaminocarbonyl, insbesondere C₆₋₁₀-Arylaminocarbonyl, Arylsulfanylcarbonyl, insbesondere C₆₋₁₀-Arylsulfanylcarbonyl, Heteroaryl, Heteroarylalkyl, insbesondere Heteroaryl-C₁₋₁₂-alkyl, Heteroaryloxy, Heteroarylamino, Heteroarylsulfanyl, Heteroarylsulfonyl, Heteroarylsulfoxidyl, Heteroarylcarbonyl, Heteroarylcarbonyloxy, Heteroaryloxycarbonyl, Heteroarylaminocarbonyl, Heteroarylsulfanylcarbonyl, Alkoxysulfonyl, insbesondere C₁₋₁₈-Alkoxysulfonyl, Alkoxycarbinol, insbesondere C₁₋₁₂-Alkoxycarbinol, Ammonium, Hydroxycarbonyl, Alkoxycarbonyl, insbesondere C₁₋₁₈-Alkoxycarbonyl, Aryloxycarbonyl, insbesondere C₆₋₁₀-Aryloxycarbonyl, Amidocarbonyl, Halogen, insbesondere Chlor, Brom, Iod oder Fluor, Nitro, Sulfato, Sulfo, Amidosulfo, Phosphato, Phosphono, Amidophosphono, Formyl, Thioformyl, -(CH₂-CH₂-O-)ₙH und -(CH₂-CH₂-CH₂-O)ₙH mit n = 1 bis 20, vorzugsweise 3 bis 20, wobei alle Reste des sich so ergebenden Moleküls, insbesondere die aliphatischen und aromatischen Reste jeweils unabhängig voneinander gegebenenfalls auch ein- oder mehrfach, insbesondere ein-, zwei- oder dreifach, vorzugsweise einfach, substituiert sein können, insbesondere durch Substituenten ausgewählt aus den zuvor genannten Resten.

Die Substituenten, stehen in einer bevorzugten Ausführungsform unabhängig voneinander für Wasserstoff, Alkyl, insbesondere C₁₋₂₂-Alkyl, vorzugsweise C₁₋₁₈-Alkyl, Cycloalkyl, insbesondere C₃₋₈-Cycloalkyl, Cycloalkylalkyl, insbesondere C₃₋₈-Cycloalkyl-C₁₋₁₂-alkyl, Alkenyl, insbesondere C₂₋₁₈-Alkenyl, Alkinyl, insbesondere C₂₋₁₈-Alkinyl, Heteroalkyl, Heterocycloalkyl, Alkanoyl, insbesondere C₁₋₁₈-Alkanoyl, Alkoxycarbonyl, insbesondere C₁₋₁₈-Alkoxycarbonyl, Alkylaminocarbonyl, insbesondere C₁₋₁₈-Alkylaminocarbonyl, Alkylsulfanylcarbonyl, insbesondere C₁₋₁₈-Alkylsulfanylcarbonyl, Aryl, insbesondere C₆₋₁₀-Aryl, Arylalkyl, insbesondere C₆₋₁₀-Aryl-C₁₋₁₂-alkyl, Arylcarbonyl, insbesondere C₆₋₁₀-Arylcarbonyl, Aryloxycarbonyl, insbesondere C₆₋₁₀-Aryloxycarbonyl, Arylaminocarbonyl, insbesondere C₆₋₁₀-Arylaminocarbonyl, Arylsulfanylcarbonyl, insbesondere C₆₋₁₀-Arylsulfanylcarbonyl, Heteroaryl, Heteroarylalkyl, insbesondere Heteroaryl-C₁₋₁₂-alkyl, Heteroarylcarbonyl, Heteroaryloxycarbonyl, Heteroarylaminocarbonyl, Heteroarylsulfanylcarbonyl, Trifluormethyl, Formyl, □(CH₂-CH₂-O-)ₙH oder □(CH₂-CH₂-CH₂-O)ₙH mit n = 1 bis 20,
wobei alle Reste des sich so ergebenden Moleküls, insbesondere die aliphatischen und aromatischen Reste, jeweils unabhängig voneinander gegebenenfalls auch ein- oder mehrfach, insbesondere ein-, zwei- oder dreifach, vorzugsweise einfach, substituiert sein können, insbesondere durch Substituenten ausgewählt aus den zuvor genannten Resten sowie ausgewählt aus Ammonium, Hydroxycarbonyl, Alkoxycarbonyl, insbesondere C₁₋₁₈-Alkoxycarbonyl, Aryloxycarbonyl, insbesondere C₆₋₁₀-Aryloxycarbonyl, Amidocarbonyl, Halogen, insbesondere Chlor, Brom, Iod oder Fluor, Nitro, Sulfato, Sulfo, Amidosulfo, Phosphato, Phosphono, Amidophosphono, Hydroxy, Alkoxy, insbesondere C₁₋₁₈-Alkoxy, Amino und Alkanoyloxy, insbesondere C₁₋₁₈-Alkanoyloxy.

Besonders bevorzugte Flammschutzmittel werden ausgewählt aus Verbindungen gemäß Formel (V) bis (XII), 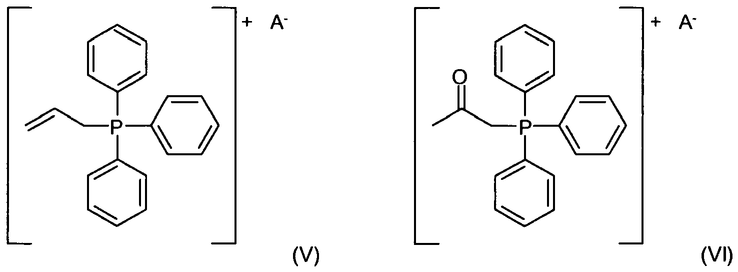 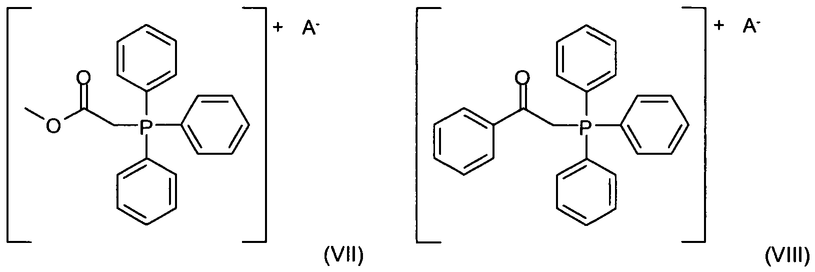 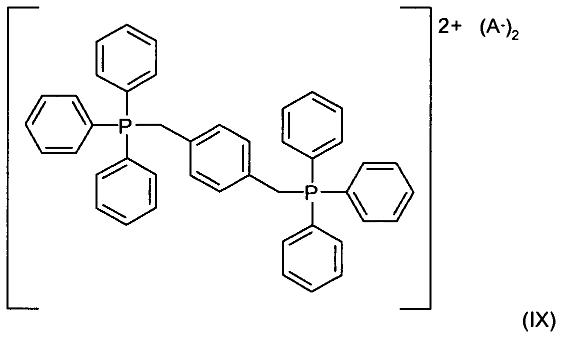 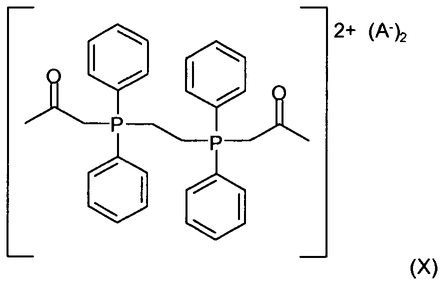 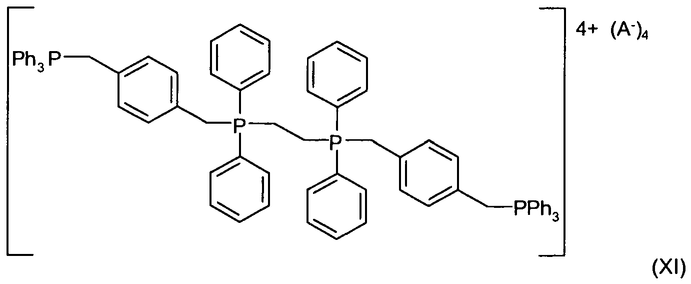 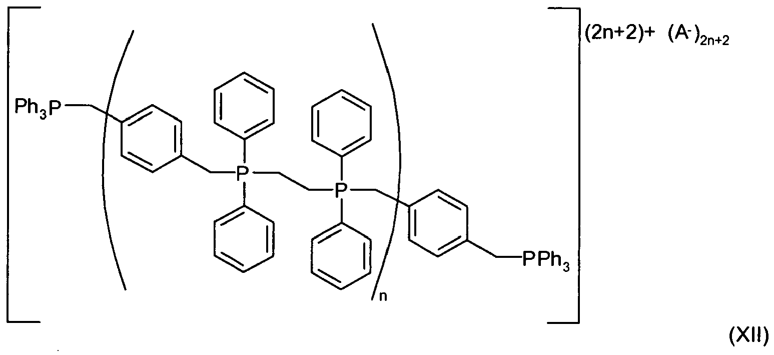 wobei n in Formel (XII) eine ganze Zahl zwischen 1 und 20000000 ist. Vorzugsweise steht n in Formel (XII) für eine ganze Zahl zwischen 1 und 1000000, besonders bevorzugt zwischen 1 und 100000 und ganz besonders bevorzugt zwischen 1 und 10000, zwischen 1 und 1000, zwischen 1 und 300, zwischen 1 und 100 und insbesondere zwischen 1 und 10

In einer überaus bevorzugten Ausführungsform des Flammschutzmittels handelt es sich bei dem schwach-koordinierenden Anion A um Hexafluoroantimonat (SbF₆⁻).

Gegenstand der vorliegenden Erfindung sind daher auch die Hexafluoroantimonate der Verbindungen gemäß Formel (VII), (X), (XI) und (XII).

Die genannten Verbindungen können durch Umsetzung der Halogenide der Verbindungen der Formel (VII), (X), (XI) und (XII) mit Metall-SbF₆-Salzen, insbesondere KSbF₆, erhalten werden, wobei die Umsetzung vorzugsweise in einem wässrigen Medium erfolgt.

Die Beschreibung der erfindungsgemäßen Flammschutzmittel bezieht sich sowohl auf deren Verwendung als auch auf deren Einsatz in der ein Epoxidharzsystem, mindestens einen Initiator und mindestens ein Flammschutzmittel umfassenden härtbaren Zubereitung.

Die Di-, Oligo-oder Polyphosphoniumkationen der Verbindungen gemäß Formel (X) bis (XII) können hergestellt werden, indem Phosphine ausgewählt aus der Gruppe der Alkyl-, Arylalkyl- oder Arylphosphine, insbesondere Triphenylphosphin und/oder 1,2-Bis-(diphenylphosphino)-ethan mit Alkylhalogeniden ausgewählt aus Verbindungen gemäß Formel (XIII) oder (XIV), 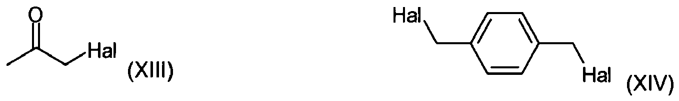 mit Hal = F, Cl, Br oder I, umgesetzt werden.

Die Kombination der erfindungsgemäßen Polyphosphoniumkationen mit schwach-koordinierenden, sterisch anspruchsvollen und wenig basischen Anionen als Gegenionen ist mit einer Reihe von Vorteilen verbunden.

Zum einen können die erfindungsgemäßen Flammschutzmittel ausgehend von den jeweiligen Phosphoniumsalzen durch Ionenaustausch unter Verwendung von entsprechenden Metallsalzen in einem effizienten und kostengünstigen Verfahren hergestellt werden.

Zum anderen zeichnen sich die erfindungsgemäßen Flammschutzmittel durch eine sehr gute Löslichkeit im jeweiligen Harzsystem, vorzugsweise im Epoxidharzsystem aus, wodurch eine hervorragende Formulierbarkeit erreicht wird.

Besonders bemerkenswert und überraschend sind die Ergebnisse des anspruchsvollen UL94-Vertikalbrenntest unter Verwendung der erfindungsgemäßen Phosphoniumsalze als Flammschutzmittel in Epoxidharzsystemen. Alle untersuchten Systeme zeigen auch bei niedrigen Additivgehalten (10 bis 20 Gewichtsanteile im Harz) und ohne den Zusatz weiterer Flammschutzmittel (Synergisten) in diesen Vertikalbrenntests eindeutig flammhemmende Eigenschaften und erreichen mindestens die Gesamtklassifizierung V1. Die Phospor- und Antimongehalte in den Harzformulierungen sind dabei sehr gering (s. Beispiel 4).
Bisher zur Verfügung stehende Flammschutzmittel konnten bei der Strahlungshärtung von Epoxidharzsystemen, die nach einem kationischen Mechanismus erfolgt, aufgrund ihres basischen und/oder nucleophilen Charakters nicht verwendet werden, da die Harze in ihrer Anwesenheit nicht oder nur unvollständig vernetzen. Die erfindungsgemäßen Flammschutzmittel bieten den Vorteil, dass sie bei einer solchen Härtung den Polymerisationsvorgang nicht behindern, sondern durch die Freisetzung extrem starker Säuren, wie beispielsweise HSbF₆, sogar noch beschleunigen, wodurch sie als effektive Flammschutzmittel und Polymerisationsbeschleuniger in kationisch polymerisierenden Harzsystemen eingesetzt werden können.

Wie bereits genannt, ist ein Gegenstand der vorliegenden Erfindung eine härtbare Zubereitung enthaltend
a) ein Epoxidharzsystem,
b) einen Initiator ausgewählt aus den folgenden Verbindungen oder deren Mischungen:
   i) Verbindungen der allgemeinen Formel (XV),

      {[M(L)ₐ]A_{b}}_{c} (XV),

      mit M = Metallkation, L = Ligand, A = schwach-koordinierendes Anion, a = 1 bis 10, bevorzugt 1 bis 6, besonders bevorzugt 1 bis 4, b = 1 bis 10, bevorzugt 1 bis 6, besonders bevorzugt 1 bis 3 und c = 1 bis 20000000, bevorzugt 1 bis 20000, besonders bevorzugt 1 bis 1000, ganz besonders bevorzugt 1 bis 500, insbesondere 1 bis 300, wobei a, b und c ganze Zahlen und Zahlenbereiche darstellen können und a zusätzlich auch nicht ganze Zahlen darstellen kann,
   ii) Verbindungen der allgemeinen Formel (XVI),

      IA (XVI)

      mit I = Diaryliodoniumsalz und A = schwach-koordinierendes Anion oder
   iii) Verbindungen der allgemeinen Formel (XVII),

      SA (XVII)

      mit S = Triarylsulfoniumsalz und A = schwach-koordinierendes Anion,
c) mindestens ein Flammschutzmittel der allgemeinen Formel (I)

   KA (I),

   mit K = Mono-, Di-, Oligo- und/oder Polyphosphoniumkation und A = schwach-koordinierendes Anion,
wobei das schwach-koordinierende Anion A des Initiators und des Flammschutzmittels ausgewählt wird aus Hexafluoroantimonat (SbF₆⁻), Hexafluorophosphat (PF₆⁻), Bortetrafluorid (BF₄⁻),

Hexafluoroaluminat (AlF₆³⁻), Trifluormethansulfonat (CF₃SO₃⁻), Hexafluoroarsenat (AsF₆⁻), Tetrakis(pentafluorphenylborat) (B[C₆F₅]₄⁻), Tetrakis[3,5-bis(trifluormethyl)phenyl]borat (B[C₆H₃(CF₃)₂]₄⁻), Tetraphenylborat (B[C₆H₅]₄⁻), Hexafluorotitanat (TiF₆²⁻), Pentachlorotitanat (TlCl₅⁻), Pentachlorostannat (SnCl₅⁻), Hexafluorogermanat (GeF₆²⁻), Hexafluorosilicat (SiF₆²⁻), Hexafluoronickelat (NiF₆²⁻) oder Hexafluorozirkonat (ZrF₆²⁻).

Unter einem □ Epoxidharzsystem□ wird im Rahmen der vorliegenden Erfindung-eine Harz Zusammensetzung verstanden, die auf der Basis von Epoxidverbindungen oder epoxidhaltigen Verbindungen gebildet wird.
In einer bevorzugten Ausführungsform der Erfindung können die Epoxidverbindungen oder epoxidhaltigen Verbindungen des Epoxidharzsystems der Zubereitung sowohl oligomere als auch monomere Epoxidverbindungen sowie Epoxide vom polymeren Typ umfassen und können aliphatische, cycloaliphatische, aromatische oder heterocyclische Verbindungen darstellen.
Die Epoxidverbindungen bzw. epoxidhaltigen Verbindungen des Epoxidharzsystems weisen im Allgemeinen durchschnittlich mindestens eine polymerisierbare Epoxidgruppe pro Molekül auf, vorzugsweise mindestens etwa 1.5 polymerisierbare Epoxidgruppen pro Molekül. Die polymeren Epoxide umfassen lineare Polymere mit endständigen Epoxidgruppen (z.B. einen Diglycidylether eines Polyoxyalkylenglycols), Polymere mit Oxiran-einheiten im Molekülgerüst (z.B. Polybutadienpolyepoxid) sowie Polymere mit am Gerüst anhängenden Epoxidgruppen (z.B. ein Glycidylmethacrylat-Polymer oder -Copolymer). Diese Epoxide können reine Verbindungen oder Mischungen sein, welche eine, zwei oder mehrere Epoxidgruppen pro Molekül enthalten. Die "durchschnittliche" Anzahl von Epoxidgruppen pro Molekül wird bestimmt, indem die Gesamtzahl der Epoxidgruppen im epoxidhaltigen Material durch die Gesamtzahl der anwesenden Epoxidmoleküle dividiert wird.
Das Molekulargewicht der Epoxidverbindungen bzw. epoxidhaltigen Verbindungen des Epoxidharzsystems variiert von 100 g/mol bis zu maximal 10000 g/mol für polymere Epoxidharze. Hinsichtlich der Natur ihres Grundgerüstes und ihrer Substituentengruppen sind den Epoxidverbindungen bzw. epoxidhaltigen Verbindungen ebenfalls keine Grenzen gesetzt.
So kann beispielsweise das Grundgerüst jedem beliebigen Typ angehören und die daran befindlichen Substituentengruppen können alle Gruppen darstellen, welche eine Aushärtung im Wesentlichen nicht stören.
Beispielsweise umfassen die Substituentengruppen Halogene, Estergruppen, Ether, Sulfonatgruppen, Siloxangruppen, Nitrogruppen, Phosphatgruppen und dergleichen.

Geeignete Epoxidharzsysteme im Rahmen der vorliegenden Erfindung sind beispielsweise vorzugsweise ausgewählt aus Epoxidharze vom Bisphenol-A-Typ, Epoxidharze vom Bisphenol-S-Typ, Epoxidharze vom Bisphenol-F-Typ, Epoxidharze vom Phenol-Novolak-Typ, Epoxidharze vom Cresol-Novolak-Typ, epoxidierte Produkte zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat ein.
Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol.

Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER⁻736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalitaet enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z. B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).

Weitere bevorzugte kommerziell erhältliche Verbindungen sind z. B. ausgewählt aus Araldite^{™} 6010, Araldit^{™} GY-281^{™}, Araldit^{™} ECN-1273, Araldit^{™} ECN-1280, Araldit^{™} MY-720, RD-2 existiert von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epiclon^{™} N673 von DaiNipon Ink Chemistry oder Epicote^{™} 152 von Hexion Specialty Chemicals Inc..
Weiterhin lassen sich als Reaktivharze auch Melamin-Harze einsetzen, wie z. B. Cymel TM-327 und -323 von Cytec.
Weiterhin lassen sich als Reaktivharze auch Terpenphenolharze, wie z. B. NIREZTM 2019 von Arizona Chemical einsetzen.
Weiterhin lassen sich als Reaktivharze auch Phenolharze, wie z. B. YP 50 von Toto Kasei, PKHC von Dow Chemical Co. und BKR 2620 von Showa Union Gosei Corp. einsetzen.
Weiterhin lassen sich als Reaktivharze auch Polyisocyanate, wie z. B. CoronateTM L von Nippon Polyurethan Ind., DesmodurTM N3300 oder MondurTM 489 von Bayer einsetzen.

Weitere Epoxidharze können vorzugsweise Copolymere von Acrylsäureestern mit Glycidol wie z.B. Glycidylacrylat und Glycidylmethacrylat mit einer oder mehreren copolymerisierbaren Vinylverbindungen sein. Beispiele solcher Copolymeren sind 1:1 Styrol-Glycidylmethacrylat, 1:1 Methylmethacrylat-Glycidylacrylat und 62.5:24:13.5 Methylmethacrylat-Ethylacrylat Glycidylmethacrylat enthalten.
Weitere verwendbare Epoxidharze sind wohlbekannt und enthalten Epoxide wie z.B. Epichlorhydrin; Alkylenoxide, z.B. Propylenoxid, Styroloxid; Alkenyloxide, z.B. Butadienoxid; Glycidylester, z.B. Ethylglycidat.
Weitere verwendbare Epoxidharze sind Silicone mit Epoxidfunktionalität, insbesondere Cyclohexylepoxid-Gruppen, insbesondere solche mit einem Silicon-Grundgerüst. Beispiele sind UV 9300, UV 9315, UV 9400 und UV 9425, welche alle von GE Bayer Silicones geliefert werden.

In einer bevorzugten Ausführungsform umfassen die erfindungsgemäßen Zubereitungen eine Mischung aus mehreren der genannten Epoxidharzsystemen.
Beispiele solcher Mischungen können zwei oder mehrere Molekulargewichtsverteilungen von epoxidhaltigen Verbindungen, wie z.B. ein niedriges Molekulargewicht (unter 200), ein mittleres Molekulargewicht (ca. 200 bis 10000) und ein höheres Molekulargewicht (über ca. 10000) umfassen. Alternativ oder zusätzlich kann das Epoxidharz eine Mischung von epoxidhaltigen Materialien unterschiedlicher chemischer Natur (z.B. aliphatisch oder aromatisch) oder Funktionalität (z.B. polar oder unpolar) enthalten.

Der Initiator der erfindungsgemäßen Zubereitung wird vorzugsweise aus Verbindungen der allgemeinen Formel (XV) {[M(L)ₐ]A_{b}}_{c} (XV) ausgewählt.

a, b, und c gemäß Formel (XV) können erfindungsgemäß sowohl ganze Zahlen als auch Zahlenbereiche darstellen und a kann zusätzlich auch nicht ganze Zahlen darstellen. Insbesondere bevorzugt ist a ein Zahlenbereich von 1 bis 6, besonders bevorzugt von 1 bis 4. Weiterhin bevorzugt ist a = 1, 1.5, 2, 3 oder 4, ganz besonders bevorzugt 1, 1.5 oder 2.

Insbesondere bevorzugt ist für b ein Zahlenbereich von 1 bis 6, besonders bevorzugt von 1 bis 3. Weiterhin bevorzugt ist b = 1, 2, 3 oder 4, ganz besonders bevorzugt 1, 2 oder 3.

c ist bevorzugt entweder 1 (monomerer Metallkomplex) oder liegt bevorzugt in einem Bereich von 1 bis 20000000 (monomere, dimere, trimere, oligomere und polymere Koordinationsverbindungen oder Gemische aus diesen), beispielsweise bevorzugt 1 bis 20000, besonders bevorzugt 1 bis 1000, ganz besonders bevorzugt 1 bis 500 oder 1 bis 300.
Insbesondere bevorzugt ist für c jedoch ein Zahlenbereich zwischen 1 bis 20000000.

Ist c = 1 bedeutet es erfindungsgemäß, dass monomere Koordinationsverbindungen vorliegen. Ist c ein Zahlenbereich von 1 bis p, bedeutet dies, dass neben monomeren auch dimere, trimere, oligomere und polymere Koordinationsverbindungen, sog. Koordinationspolymere, und Gemische aus diesen mit unterschiedlicher Kettenlänge vorliegen.

Ebenfalls bevorzugt ist eine erfindungsgemäße, härtbare Zubereitung, wobei der Initiator gemäß Formel (XV) der Zubereitung, umfassend mindestens ein Metallkation M, mindestens einen Liganden L und mindestens Hexafluoroantimonat (SbF₆⁻) als schwach-koordinierendes Anion, durch Komplexbildungsreaktion eines entsprechenden Metall-SbF₆-Salzes mit einem entsprechenden Liganden (L) erhalten wird.

In einer bevorzugten Ausführungsform der erfindungsgemäßen Zubereitung kann das Metallkation (M) der Initiatoren gemäß Formel (XV) ausgewählt sein aus der Gruppe der Übergangsmetalle der vierten oder fünften Periode oder der zweiten oder dritten Hauptgruppe des Periodensystems. Insbesondere bevorzugt ist das Metallkation (M) ausgewählt aus der Gruppe umfassend Ag, Fe, Mg, Co, Cu, Al oder Ti.

In einer weiteren bevorzugten Ausführungsform der Zubereitung ist der Ligand (L) eine Verbindung mit mindestens einer (C-C)-Doppel- und / oder Dreifachbindung, bevorzugt ein substituiertes oder unsubstituiertes, verzweigtes oder nicht verzeigtes, cyclisches oder nicht-cyclisches Alken oder Alkin mit 1 bis 30 C-Atomen.
In einer weiteren bevorzugten Ausführungsform ist der Ligand (L) ein Ether, insbesondere ein cyclischer Ether, vorzugsweise ein Kronenether.

In einer weiteren bevorzugten Ausführungsform ist der Ligand (L) eine Verbindung aus der Gruppe der Nitrile. Eine solche Verbindung umfasst mindestens eine C≡N-Gruppe.

Geeignete bevorzugte Liganden (L) sind beispielsweise ausgewählt aus
Propen, 1-Buten, 1-Penten, 1-Hexen, 1-Octen, 1-Decen, Isopren, Norbornen, Cyclohexen, Cycloocten, Cyclodecen, 1,4-Cyclohexadien, 4-Vinylcyclohexen, trans-2-Octen, Styrol, 5-Norbornen-2-carbonsäure, Butadien, 1,5-Hexadien, 1,6-Heptadien, 1,7-Octadien, 1,9-Decadien, Sorbinsäureethylester, 1,3-Cyclohexadien, 1,3-Cyclooctadien, 1,5-Cyclooctadien, Norbornadien, Dicyclopentadien, Cycloheptatrien, trans,trans,trans-1,5,9-Cyclododecatrien, trans,trans,cis-1,5,9-Cyclododecatrien, Cyclooctatetraen, Squalen, Diallylcarbonat, Diallylether, Diallyldimethylsilan, Nopol, Cyclopentadien, Ethylvinylether, Limonen, 1,2-Dihydronaphthalin, Zimtsäureethylester, Ethylacrylat, Ethylmethacrylat, Stilben, Ölsäuremethylester, Linolsäuremethylester, Linolensäuremethylester, Diphenylacetylen, Dimethylacetylen, 3-Hexin, 1,8-Cyclotetradecadiin, Propargylalkohol, Vinylacetylen, 15-Krone-5, 18-Krone-6, 1-Phenylpropin, 1,8-Nonadiin, 18-Krone-6-tetracarbonsäure.

Voraussetzung zur Bildung von dimeren, trimeren, und oligomeren Koordinationsverbindungen sowie Koordinationspolymeren sind mehrfunktionelle Liganden L, welche in der Lage sind mehrere Metallzentren zu verknüpfen und so den Aufbau dimerer, trimerer, oligomerer und polymerer Strukturen ermöglichen. Mit Monoalkenen und □alkinen sowie Kronenethern ist dies nicht möglich und es werden bevorzugt ausschließlich einkernige Koordinationsverbindungen d.h. monomere Komplexe mit nur einem Metallzentrum erhalten (die Parameter a und b sind variabel, c = 1). Im Fall cyclischer Di-, Tri- oder Tetraene (z.B. 1,5-Cyclooctadien, Cycloheptatrien oder Cyclooctatetraen) werden, bevorzugt überwiegend einkernige Metallkomplexe erhalten, die Bildung mehrkerniger ligandverbrückter Strukturen ist jedoch auch möglich. Werden offenkettige Diene als Liganden L eingesetzt so kann, je nach Metallkation und Anion, auch die Bildung von Koordinationspolymeren favorisiert sein. Wird beispielsweise AgSbF₆ mit 1,7-Octadien umgesetzt, so wird vorzugsweise {[Ag(1,7-Octadien)_{1.5}]SbF₆}_{c>1000}, ein Koordinationspolymer mit beispielsweise eindimensionaler Kettenstruktur (a = 1.5, b = 1, c > 1000), in dem die Silberzentren bevorzugt abwechselnd durch 1 und 2 Moleküle 1,7-Octadien verbrückt sind, erhalten:

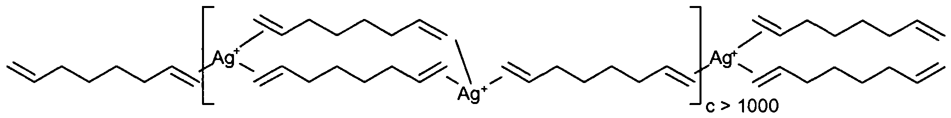

Mit den Liganden 1,5-Hexadien und 1,9-Decadien ergeben sich vorzugsweise ähnliche Strukturen. Mit zunehmender Zahl an Doppelbindungen im Liganden ergeben sich immer mehr Verzweigungsmöglichkeiten, die resultierenden Strukturen werden vorzugsweise komplexer und es werden vorzugsweise Gemische unterschiedlich vernetzter oligomerer und polymerer Koordinationsverbindungen erhalten, wie beispielsweise beim Liganden Squalen, einem offenkettigen Hexaalken. Vorzugsweise werden neben einkernigen Verbindungen auch mehrkernige Verbindungen gebildet.

In einer besonders bevorzugten Ausführungsform der Zubereitung wird der Initiator gemäß Formel (XV) ausgewählt aus [Ag(Cyclohexen)₁₋₄]SbF₆, [Ag(Cycloocten)₁₋₄]SbF₆,
[Ag(Cyclododecen)₁₋₄]SbF₆, [Ag(trans-2-Octen)₁₋₄]SbF₆, [Ag(Styrol)₁₋₄]SbF₆, [Ag(5-Norbornen-2-carbonsäure)₁₋₄]SbF₆, {[Ag(1,5-Hexadien)₁₋₄]SbF₆}₁₋ₚ, {[Ag(1,7-Octadien)₁₋₅]SbF₆}ₚ, {[Ag(1,7-Octadien)_{1.5}]SbF₆}₁₀₀₀, {[Ag(1,7-Octadien)_{1.5}]SbF₆}₅₀₀,
{[Ag(1,9-Decadien)₁₋₄]SbF₆}₁₋ₚ, {[Ag(Sorbinsäureethylester)₁₋₄]SbF₆}₁₋ₚ,
[Ag(1,3-Cyclohexadien)₁₋₄]SbF₆)₁₋ₚ, {[Ag(1,3-Cyclooctadien)₁₋₄]SbF₆}₁₋ₚ,
Ag(1,5-Cyclooctadien)₂]SbF₆, {[Ag(Norbornadien)₁₋₄]SbF₆}₁₋ₚ, {[Ag(Dicyclopentadien)₁₋₄]SbF₆}₁₋ₚ, {[Ag(Cycloheptatrien)₁₋₄]SbF₆}₁₋ₚ, {[Cu(1,7-Octadien)₁₋₄]SbF₆}₁₋ₚ, [Cu(1,5-Cyclooctadien)₂]SbF₆, [Cu(15-Krone-5)]SbF₆, [Fe(15-Krone-5)](SbF₆)₃, [Fe(18-Krone-6)](SbF₆)₃, [Mg(15-Krone-5)](SbF₆)₂, [Co(15-Krone-5)](SbF₆)₂, [Ag(1R-(-)-Nopol)₁₋₄]SbF₆, [Ag(Allylglycidylether)₁₋₄]SbF₆, {[Ag(trans,trans,cis-1,5,9-Cyclododecatrien)₁₋₄]SbF₆)₁₋ₚ,
{[Ag(trans,trans,trans-1,5,9-Cyclododecatrien)₁₋₄]SbF₆}₁₋ₚ,
{[Ag(Cyclooctatetraen)₁₋₄]SbF₆}₁₋ₚ, {[Ag(Squalen)₁₋₄]SbF₆}₁₋ₚ und/oder deren beliebigen Mischungen, wobei p = 20000000 ist.

Der Initiator der erfindungsgemäßen Zubereitung wird weiterhin vorzugsweise aus Verbindungen der allgemeinen Formel (XVI)

IA (XVI)

ausgewählt, wobei I für ein Diaryliodoniumsalz steht und A ein erfindungsgemäßes schwach-koordinierendes Anion ist.
Besonders bevorzugte erfindungsgemäße Initiatoren gemäß Formel (XVI) sind Verbindungen gemäß Formel (XVIII), 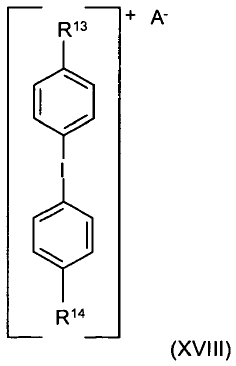 wobei R¹³ und R¹⁴ unabhängig voneinander ausgewählt werden aus der Gruppe bestehend aus Wasserstoff, Methyl, Ethyl, n-Propyl, Isopropyl, n-Butyl, tert-Butyl, Cl, Br, OCᵢH2ᵢ+1,
OCH₂CH(CH3)CᵢH2ᵢ₊₁, OCH₂CH(C₂H₅)CᵢH2ᵢ₊₁, OCH₂CH(OH)CᵢH2ᵢ₊₁, OCH₂CO₂CᵢH2ᵢ₊₁. OCH(CH₃)CO₂CᵢH2ᵢ₊₁, OCH(C₂H₅)CO₂CᵢH2ᵢ₊₁ und i eine ganze Zahl zwischen 0 und 18 ist.

Der Initiator der erfindungsgemäßen Zubereitung wird ebenfalls vorzugsweise aus Verbindungen der allgemeinen Formel (XVII),

SA (XVII)

ausgewählt, wobei S für ein Triarylsulfoniumsalz steht und A ein erfindungsgemäßes schwach-koordinierendes Anion ist.

Besonders bevorzugte Initiatoren gemäß Formel (XVII) werden aus Verbindungen gemäß Formel (XIX) und/oder Formel (XX) oder deren Mischungen ausgewählt, 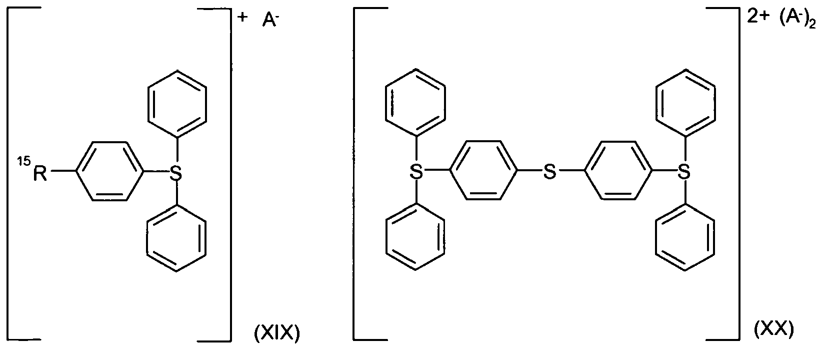 wobei R¹⁵ ausgewählt wird aus der Gruppe bestehend aus Wasserstoff, Methyl, Ethyl, n-Propyl, Isopropyl, n-Butyl, tert-Butyl, Phenylsulfid (PhS) und Phenoxy (PhO).

Die erfindungsgemäßen Initiatoren gemäß Formel (XVI) und Formel (XVII) werden in den US-Patentschriften 5726216 und 5877229 von Janke et al. als kationische Initiatoren beschrieben. Bespiele für kommerziel erhältliche Diaryliodoniumsalze und Triarylsulfoniumsalze sind (4-octyloxyphenyl)phenyliodonium-hexafluoroantimonat, das von General Electric Corporation als Aryl-Fluoroantimonat-Produkt 479-2092 vertrieben wird und CYRACURE UVI-6974, CYRACURE UVI-6990 (Union Carbide Corporation), DEGACURE KI-85 (Degussa Corporation) und FX-512 der 3M Corporation.

In einer weiteren bevorzugten Ausführungsform der härtbaren Zubereitung ist das schwach-koordinierende Anion A des Initiators und/oder des Flammschutzmittels Hexafluoroantimonat (SbF₆⁻).

Vorzugsweise beträgt der Anteil des Initiators 0,01 bis 10 Gew.%, bevorzugt 0,5 bis 3 Gew.-% und besonders bevorzugt 1 bis 2 Gew.-% und der Anteil des Flammschutzmittels 0,01 bis 50 Gew.-%, bevorzugt 0,5 bis 30 Gew.-%, besonders bevorzugt 2 bis 21 Gew.% und insbesondere 20 Gew.-% oder 10 Gew.-% beträgt, jeweils bezogen auf die Gesamtmenge der Zubereitung.

In den erfindungsgemäßen Zubereitungen können auch beliebige Mischungen verschiedener erfindungsgemäßer Initiatoren und/oder beliebige Mischungen verschiedener erfindungsgemäßer Flammschutzmittel verwendet werden.

Ebenfalls bevorzugt im Sinne der Erfindung ist eine Zubereitung, die neben den genannten Komponenten mindestens eine weitere Komponente ausgewählt aus der Gruppe der Füllstoffe, Stabilisatoren, Härterbeschleuniger, Antioxidantien, Verdicker, Katalysatoren, Reaktivverdünner, Weichmacher, weiteren Flammschutz-Additive, Schlagzäh-Additive, wie beispielsweise Elastomere, Thermoplaste, Core-Shell Partikel, Nanopartikel, Block-Copolymere und/oder Nanoröhrchen, enthält.

Als Weichmacher geeignet sind beispielsweise vorzugsweise Ester wie Abietinsäureester, Adipinsäureester, Azelainsäureester, Benzoesäureester, Buttersäureester, Essigsäureester, Phosphorsäureester, Phthalsäureester; Ester höherer Fettsäuren mit etwa 8 bis etwa 44 C-Atomen, wie Dioctyladipat, Diisodecylsuccinat, Dibutylsebacat oder Butyloleat, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, wie beispielsweise Dioctylphthalat, Dibutylphthalat oder Butylbenzylphthalat, Propionsäure-ester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind bevorzugt die reinen oder gemischten Ether monofunktioneller, linearer oder verzweigter C4-16-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C1-4-alkylether, insbesondere die Dimethyl- oder Diethylether von Diethylenglykol oder Dipropylenglykol, sowie Gemische aus zweien oder mehreren dieser.

Die erfindungsgemäße Zubereitung kann bis zu etwa 80 Gew.-% an Füllstoffen enthalten. Als Füllstoffe geeignet sind anorganische Füllstoffe, beispielsweise natürlich vorkommende oder synthetische Materialien wie z.B. Quarz, Nitride (z.B. Siliciumnitrid), z.B. von Ce, Sb, Sn, Zr, Sr, Ba und Al abgeleitete Gläser, kolloidales Siliciumdioxid, Feldspat, Borsilikatgläser, Kaolin, Talk, Titandioxid und Zinkgläser, sowie Siliciumdioxidteilchen von Submikrongröße (z.B. pyrogene Siliciumdioxide wie z.B. die Siliciumdioxide der Serien "Aerosil" "OX 50", "130", "150" und "200", welche von Degussa verkauft werden, sowie "Cab-O-Sil M5", welches von Cabot Corp. verkauft wird), Aluminiumsilikate, Magnesiumsilikate, Zeolithe, Bentonite, gemahlene Mineralstoffe, Calciumcarbonate, Quarzstaub, Kieselsäureanhydrid, Siliciumhydrat oder Ruß, Magnesiumcarbonat, gebrannter Ton, Ton, Eisenoxid, Zinkoxid, Titanium Dioxid, Zellstoff, Holzmehl, Glimmer, Spreu, Graphit, feines Aluminiumpulver oder Feuersteinpulver, Glaskugeln, Glasmehl, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln, sowie funktionelle Füllstoffe, die die rheologischen Eigenschaften positiv beeinflussen, beispielsweise hochdisperse Kieselsäure, insbesondere mit niedriger BET-Oberfläche von 20-150, bevorzugt 30-100, insbesondere bevorzugt etwa 50 m²/g. Gegebenenfalls können Füllstoffe eingesetzt werden, die der Zubereitung Thixotropie verleihen, beispielsweise quellbare Kunststoffe wie PVC.

Geeignete additive Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5-, C-9-, (C-5)2-Harze), gemischte C-5/C-9-Harze, hydrierte und teilhydrierte Derivate der genannten Typen, Harze aus Styrol oder α-Methylstyrol sowie TerpenPhenolharze und weitere wie aufgeführt in Ullmanns Enzyklopädie der technischen Chemie (4. Aufl.), Band 12, S. 525-555, Weinheim.

Geeignete Lösungsmittel sind Wasser, Ketone, niedere Alkohole, niedere Carbonsäuren, Ether und Ester wie (Meth)acrylsaeure(ester), Aceton, Acetylaceton, Acetoessigester, Methylethylketon, Methylisobutylketon, Cyclopentanon, Cyclohexanon, N-Methylpyrrolidon, Dioxan, Tetrahydrofuran, 2-Methoxyethanol, 2-Ethoxyethanol, 1-Methoxy-2-propanol, 1,2-Dimethoxyethan, Ethylacetat, n-Butylacetat, Ethyl-3-ethoxypropionat, Methanol, Ethanol, iso-Propanol, n-Propanol, n-Butanol, isoButanol, sek-Butanol, tert-Butanol, Diacetonalkohol, 2-Ethylhexylalkohol, Ethylenglycol, Diethylenglycol, Ethylenglycoldimethylether, Ethylenglycoldiethylether, Ethylenglycoldi-n-butylether, Diethylenglycol, Diethylenglycoldimethylether, Diethylenglycoldiethylether, Diethylenglycoldi-n-butylether, Polyethylenglykole, Ameisensäure, Essigsäure oder Propionsäure, THF, Dioxan, Acetonitril, Propionitril, Dimethylformamid, Dimethylsulfoxid, Sulfolan, Dimethylcarbonat, Diethylcarbonat, Di-n-butyicarbonat, 1,2-Ethylencarbonat, 1,2-Propylencarbonat oder 1,3-Propylencarbonat sowie aromatische Kohlenwasserstoffe, wie Toluol und Xylol.

Die als Haftvermittler und/oder Reaktivverdünner bevorzugten α-Silane sind vorteilhaft aus der Gruppe bestehend aus -, α-Methacryl-, α-Carbamatosilanen und α-Alkoxysilanen auswählbar.

Geeignete Beispiele sind (Methacryloxymethyl)methyldiethoxysilan und Methacryloxymethyltriethoxysilan, N-(Triethoxysilylmethyl)-O-methyl-carbamat und N-(Methyldiethoxysilylmethyl)-O-methyl-carbamat.

Als Verdicker kommen neben radikalisch (co)polymerisierten (Co)Polymerisaten, übliche organische und anorganische Verdicker wie Hydroxymethylcellulose oder Bentonit in Betracht.

Als geeignete Katalysatoren zur Förderung der Vernetzung kommen insbesondere Morpholin, N-Methylmorpholin, 1,3-Diazabicyclo[5.4.6]undecene-7 (DBU). Weitere geeignete Katalysatoren sind solche auf Basis von organischen oder anorganischen Schwermetallverbindungen, wie beispielsweise Kobaltnaphthenat, Dibutylzinndilaurat, Zinnmercaptide, Zinndichlorid, Zirkontetraoctoat, Zinnnaphthenat, Zinnstearat, Antimondioctoat, Bleidioctoat, Metall-, insbesondere Eisenacetylacetonat. Insbesondere kommen alle für die Beschleunigung der Silanol-Kondensation bekannten Katalysatoren in Frage. Beispielsweise sind dies Organozinn-Organotitan-, Organozirkon- oder Organoaluminiumverbindungen. Beispiele für derartige Verbindungen sind Dibutylzinndilaurat, Dibutylzinndimaleat, Zinnoctoat, Isopropyltriisostearoyltitanat, Isopropyltris(dioctylpyrophosphat)titanat, Bis(dioctylpyrophosphat)oxyacetattitanat, Tetrabutylzirconat, Tetrakis(acetylacetonato)zirkonium, Tetraisobutylzirkonat, Butoxytris(acetylacetonato)zirkonium, Tris(ethylacetoacetato)aluminium. Dibutylzinnalkylester wie Dibutylzinnalkylmaleate oder Dibutylzinnlaurate sind besonders geeignet, insbesondere Dibutylzinnbisethylmaleat, Dibutylzinnbisbutylmaleat, Dibutylzinnbisoctylmaleat, Dibutylzinnbisoleylmaleat, Dibutylzinnbisacetylacetat, Dibutylzinndiacetat, Dibutylzinndioctoat, Dibutylzinnoxid, Dibutylzinnbistriethoxysilikat und deren katalytisch wirksame Derivate. Die genannten Katalysatoren können alleine oder als Gemisch aus zwei oder mehr der genannten Katalysatoren eingesetzt werden.
Die erfindungsgemäßen Zubereitungen können bis zu 5 Gew.-% solcher Katalysatoren in der Gesamtzusammensetzung enthalten.
Die erfindungsgemäßen Zubereitungen können weiterhin bis zu etwa 7 Gew.-%, insbesondere etwa 3 bis etwa 5 Gew.-% Antioxidantien in der Gesamtzusammensetzung enthalten.

Zu den im Rahmen der Erfindung als Zusatzstoffe einsetzbaren Stabilisatoren oder Antioxidantien, zählen gehinderte Phenole hohen Molekulargewichts (M_{w}), polyfunktionelle Phenole und schwefel-und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaery-thrittetrakis-3-(3,5-di-tert-butyl-4-hydroxyphenyl)propionat; n-Octa-decyl-3,5-di-tert-butyl-4-hydroxyphenyl)propionat; 4,4-Methylenbis(2,6-dktert-butyl-phenol); 4,4-Thiobis(6-tert-butyl-o-cresol); 2,6-Di-tert-butylphenol; 2,4-Dimethyl-6-tert-butylphenol, 2,2-Methylen-bis-(4-methyl-6-tert-butylphenol; 4,4-Butyliden-bis-(3-methyl-6-tert-butylphenol); 4,4-Thiobis(3-methyl-6-tert-butylphenol); 2,6-Di-tert-butyl-p-cresol; 6-(4-Hydroxyphenoxy)-2,4-bis(n-octyl-thio)-1,3,5-triazin; Tetrakis[methylen-3-(3,5-di-tert-butyl-4-hydroxyphenyl)propionate]methan; 1,1,3-Tris(2-methyl-4-hydroxy-4-tert-butylphenyl)butan; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat].
Als Photostabilisatoren sind beispielsweise diejenigen geeignet, die unter dem Namen Thinuvin® (Hersteller: Ciba Geigy) im Handel erhältlich sind.

Geeignete Stabilisatoren, die typische UV-Absorber sind und Lichtstabilisatoren darstellen, können ebenfalls enthalten sein, vorzugsweise ausgewählt aus den Gruppen der Oxanilide, Triazine und Benzotriazole (letztere erhaeltlich als Tinuvin^{®}-Marken der Ciba-Spezialitätenchemie) und Benzophenone oder Kombinationen hiervon. Es kann vorteilhaft sein Lichtstabilisatoren zuzugeben, die UV-Licht nicht absorbieren.

Eine Auswahl geeigneter bevorzugter UV-Absorber und Lichtstabilisatoren, die in den erfindungsgemäßen Zubereitungen enthalten sein können, sind:
2-Hydroxybenzophenone, zum Beispiel die 4-Hydroxy-, 4-Methoxy-, 4-Octyloxy-, 4-Decyloxy-, 4-Dodecyfoxy-, 4-Benzyloxy-, 4,2',4'-Trihydroxy- und
2'-Hydroxy-4,4'-dimethoxy-Derivate;
Ester von substituierten und unsubstituierten Benzoesäuren, wie zum Beispiel 4-Tertbutylphenylsalicylat, Phenylsalicylat, Octylphenylsalicylat, Dibenzoylresorcinol, Bis(4-tert-butylbenzoyl)resorcinol, Benzoylresorcinol, 2,4-Di-tert-butylphenyl-3,5-di-tert-butyl-4-hydroxybenzoat, Hexadecyl-3,5-di-tert-butyl-4-hydroxybenzoat, Octadecyl-3,5-di-tert-butyl-4-hydroxybenzoat, 2-Methyl-4,6-di-tert-butylphenyl-3,5-di-tert-butyl-4-hydroxybenzoat.

Die erfindungsgemäßen Zubereitungen können bis zu etwa 2 Gew.-%, vorzugsweise etwa 1 Gew.-% solcher UV-Stabilisatoren in der Gesamtzusammensetzung enthalten.

Die erfindungsgemäßen Zubereitungen können weiterhin Schlagzäh-Additive (Schlagzähmodifier) enthalten.
Geeignete Schlagzäh-Additive sind beispielsweise end-funktionalisierte oder nicht end-funktionalisierte Thermoplaste wie Polysulfone, Polyphenylsulfone, Polyethersulfone (z.B. Radel und Udel von Solvay, oder Ultrason von BASF), Polyetheretherketone, Polyetherketone, Polybutylenterephthalate, Polycarbonate, Polyetherimide, Polyethylen, Nylon, Polyamidimide, Poly(arylether), Polyester, Polyarylate.
Geeignete Elastomere, die ebenfalls als Schlagzähmodifier fungieren sind zum Beispiel EPDM-oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, SBS, SIS oder IR; solche Polymere sind zum Beispiel als SEPS und SEBS bekannt), Copolymere von Styrol, Butadien, und Ethylen, oder Styrol, Butylene, Ethylene, Butadien, Butylkautschuk, Neopren Kautschuk, und Poly(siloxane).

Weiterhin können Polymere mit einem Molekulargewicht von etwa 5000 bis 2 000 000, vorzugsweise 10 000 bis 1 000 000, wie bevorzugt Homo- und Copolymere von Acrylaten und Methacrylaten, Copolymere von Methylmethacrylat/Ethylacrylat/Methacrylsaeure, Poly(alkylmethacrylaten), Poly(alkylacrylaten); Celluloseester und Ether wie Celluloseacetat, Celluloseacetobutyrat, Methylcellulose, Ethylcellulose; Polyvinylbutyral, Polyvinylformal, cyclisierter Kautschuk, Polyether wie Polyethylenoxid, Polypropylenoxid, Polytetrahydrofuran; Polystyren, Polycarbonat, Polyurethan, chlorierte Polyolefine, Polyvinylchlorid, Copolymere von Vinylchlorid/Vinylidenchlorid, Copolymer von Vinylidenchlorid mit Acrynitril, Methylmethacrylat und Vinylacetat, Polyvinylacetat, Copoly(ethylen/vinylacetat), Polymere wie Polycaprolactam und Poly(hexamethylenadipamid), Polyester wie Poly(ethylenglycolterephthalat) und Poly(hexamethylenglycolsuccinat) als Schlagzäh-Additive verwendet werden.

Geeignete Nanopartikel, die ebenfalls als Schlagzähmodifier eingesetzt werden können sind insbesondere solche auf der Basis von Siliciumdioxid (z.B. Nanopox von Nanoresins), Aluminiumoxid, Zirkoniumoxid und Barium Sulfat. Sie weisen vorzugsweise eine Teilchengröße von weniger als 50 nm auf. Beispiele geeigneter Nanopartikel auf der Basis von Siliciumdioxid sind pyrogene Siliciumdioxide, welche unter dem Handelsnamen Aerosil® VP8200, VP721 oder R972 von der Firma Degussa oder den Handelsnamen Cab 0 Sil® TS 610, CT 1110F oder CT 1110G von der Firma CABOT vertrieben werden. "Multiwall" und "Single-Walf" Nanoröhrchen mit einer modifizierten oder nicht modifizierten Oberfläche sind ebenso einsetzbar.
Ebenfalls denkbar sind Nanopartikel, die in Form von Dispersionen vorliegen, beispielsweise die Dispersion, welche unter dem Handelsnamen High Link® OG 103-31 von der Firma Clariant Hoechst vertrieben wird.
Geeignete Core-Shell Partikel, die z.B. einen vernetzten Silica-Kern und eine funktionalisierte Schale haben (z.B. Genioperl von Wacker, Albidur von Nanoresins) oder die z.B. einen Kautschuk-Kern haben (z.B. Zeon, Kaneka) sowie geeignete hoch funktionalisierte Polymere z.B. Polyole, dendritische Polymere (z.B. Boltorn von Perstorp) und Polyester, können ebenfalls verwendet werden.

Die erfindungsgemäßen Zubereitungen können bis zu 90 Gew.-%, vorzugsweise bis zu 80 Gew.-%, besonders bevorzugt bis zu 50 Gew.% Schlagzäh-Additive in der Gesamtzusammensetzung enthalten.

Weiterhin können die erfindungsgemäßen Zubereitungen thermische Inhibitoren enthalten, die dazu vorgesehen sind, eine vorzeitige Polymerisation zu verhindern.
Geeignete Inhibitoren sind beispielsweise Hydrochinon, Hydrochinonderivative, p-Methoxyphenol, β-Naphthol oder sterisch gehinderte Phenole wie 2,6-Di(tert-butyl)-p-kresol.

Geeignete Dispergiermittel sind wasserlösliche organische Verbindungen mit hohem Molekulargewicht, die polare Gruppen tragen, beispielsweise Polyvinylalkohole, Polyether, Polyvinylpyrrolidon oder Celluloseether.

Geeignete Emulgatoren können nichtionische Emulgatoren sein und in einigen Fällen können ebenso ionische Emulgatoren verwendet werden.

Weiterhin ist es möglich weitere aus dem Stand der Technik bekannte Initiatoren in den erfindungsgemäßen Zubereitungen einzusetzen, um die initiierte Polymerisation durch die erfindungsgemäßen Initiatoren zu unterstützen.
So können beispielsweise thermisch aktivierbare Initiatoren zugesetzt werden ausgewählt aus organischen Azoverbindungen, organischen Peroxiden, C-C-spaltenden Initiatoren wie Benzpinakolsilylether, Hydroxyimide wie z.B. N-Hydroxyphthalimid oder N-Hydroxysuccinimid.
Zu den thermisch aktivierbaren Peroxoverbindungen, welche sich als Initiatoren eignen, zählen Vertreter der verschiedenen peroxidischen Verbindungen, wie Disuccinoylperoxid, Kaliumperoxodisulfat, Cyclohexylsulfonylacetylperoxid, Dibenzoylperoxid, Cyclohexanonperoxid, Di-tert-Butylperoxid, Dialkylperoxide, Diacylperoxide, Peroxydicarbonate, Perketale, Peroxycarbonsäuren und deren Ester, Ketonperoxide und/oder Hydroperoxide. Besonders bevorzugt sind Di(3,5,5-trimethylhexanoyl)peroxid, Didecanoylperoxid, Dilauroylperoxid, Dibenzoylperoxid, Di(2-ethylhexyl)peroxydicarbonat, Dicyclohexylperoxydicarbonat, Di(4-tert-butylcyclohexyl)peroxydicarbonat, Dimyristylperoxydicarbonat, Diacetylperoxydicarbonat, Di-tert-butylperoxyoxalat sowie Peroxycarbonsäureester aus den Reaktionsprodukten zwischen Pivalinsaeure, Neodecansäure oder 2-Ethylhexansäure und tert-Butylhydroperoxid, tert-Amylhydroperoxid, Cumylhydroperoxid, 2,5-Dimethyl-2,5-dihydroperoxy-hexan, 1,3-Di(2-hydroxyperoxyisopropyl)benzol.

Es kommt auch ein System aus zwei oder mehr der vorgenannten thermisch aktivierbaren Initiatoren in Frage.

In einer weiteren Ausführungsform können die Initiatoren in der erfindungsgemäßen Zubereitung mit anderen Initiatoren eingesetzt werden. Dies können beispielsweise dem Fachmann bekannte Photoinitiatoren sein.
Geeignete bevorzugte Photoinitiatoren sind beispielsweise Benzophenon, Acetophenon, Acetonaphthochinon, Methylethylketon, Valerophenon, Hexanophenon, α-Phenylbutyrophenon, p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, β-Methylanthrachinon, tert-Butylanthrachinon, Anthrachinoncarbonsaeureester, Benzaldehyd, α-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4-Di-iso-propylthioxanthon, 2,4-Dichlorthioxanthon, Benzoin, Benzoin-iso-butylether, Chloroxanthenon, Benzoin-tetrahydropyranylether, Benzoinmethylether, Benzoin-ethylether, Benzoin-butylether, Benzoiniso-propylether, 7-H-Benzoinmethylether, Benz[de]anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Diethoxy-2-phenylacetophenon, 1,1-Dichloracetophenon, 1-Hydroxyacetophenon, Acetophenondimethylketal, o-Methoxybenzophenon, Triphenylphosphin, Trio-tolylphosphin, Benz[a]anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinon wie 2-Methylanthrachinon, 2-Ethylanthrachinon, 2-tert-Butylanthrachinon, 1-Chloranthrachinon, 2-Amylanthrachinon und 2,3-Butandion, 2,4,6-Trimethylbenzoyldiphenylphosphinoxid (Lucirin^{®} TPO der BASF AG), Ethyl-2,4,6-trimethylbenzoylphenylphosphinat (Lucirin^{®} TPO L der BASF AG), Bis-(2,4,6-trimethylbenzoyl)-phenylphosphinoxid (Irgacure^{®} 819 der Firma Ciba Spezialiätenchemie), Benzophenone, Hydroxyacetophenone, Phenylglyoxylsäure und ihre Derivate oder Gemische dieser Photoinitiatoren.

Als Beschleuniger für die thermische Nachhärtung kann vorzugsweise z. B. Zinnoctoat, Zinkoctoat, Dibutylzinnlaureat oder Diaza[2.2.2]bicyclooctan in den erfindungsgemäßen Zubereitungen verwendet werden.

In einer weiteren bevorzugten Ausführungsform der erfindungsgemäßen Zubereitung setzt man, neben den Initiatoren, zusätzlich eine Kombination aus einem thermisch aktivierbaren Initiator und einem photochemischen Initiator in den erfindungsgemäßen Zubereitungen ein. Das hat den Vorteil, dass Initiatoren eingesetzt werden können, die auf ihren Anwendungsbereich hin optimiert sind.

Die erfindungsgemäße Zubereitung, die einen erfindungsgemäßen Initiator, mindestens ein erfindungsgemäßes Flammschutzmittel und ein erfindungsgemäßes Epoxidharzsystem enthält, ist vorzugsweise nicht-thermisch härtbar.

Aufgrund der chemischen Struktur der erfindungsgemäßen Initiatoren handelt es sich bei der nicht-thermische Härtung der Zubereitungen im Wesentlichen um einen kationischen Polymerisationsvorgang.

Unter "nicht-thermisch" wird in der vorliegenden Erfindung eine durch Strahlung initiierte Härtung verstanden, wobei eine durch gezielt und aktiv zugeführte thermische Energie herbeigeführte thermische Initiierung nicht umfasst ist. Bei der "nicht-thermischen" Härtung kann durch die strahlungsinitiierte Härtung thermische Energie entstehen.

Die nicht-thermische Härtung erfolgt aufgrund der erfindungsgemäßen Initiatoren vorwiegend nach einem kationischen Mechanismus.

Vorzugsweise erfolgt die Härtung der erfindungsgemäßen Zubereitung durch Strahlen mit mindestens einer Wellenlänge von 1 mm, vorzugsweise mindestens 780 nm, bevorzugt mindestens 1 nm, ganz besonders bevorzugt von mindestens 10 pm.
Die erfindungsgemäße Zubereitungen ist bevorzugt durch Strahlung ausgewählt aus Röntgen-, Gamma-, Elektronen-, UV- und / oder Mikrowellen-Strahlen härtbar.

Dabei gibt es keine speziellen Einschränkungen für die Strahlungsquelle.
Vorzugsweise kann als Quelle für UV-Strahlen eine Quecksilberlampe, eine Halogenlampe, aber auch monochromatische Strahlung in Form von Lasern verwendet werden.
Erfolgt das Härten unter Verwendung von UV-Strahlen, so findet die UV-Vernetzung bevorzugt mittels kurzzeitiger ultravioletter Bestrahlung in einem Wellenlängenbereich von 200 bis 450 nm statt, insbesondere unter Verwendung von Quecksilber-Hochdruck- oder -Mitteldruck-Lampen bei einer Leistung von 80 bis 240 W/cm.

Als Beispiele der Quelle von Elektronenstrahlen kann ein System zur Nutzung von Thermoelektronen, erzeugt durch kommerziell erhältlichen Wolframfaden, ein Kaltkathodenverfahren, welches Elektronenstrahlen mittels Durchleiten eines hohen Spannungsimpulses durch ein Metall erzeugt, und ein sekundäres Elektronenverfahren, das sekundäre Elektronen, die durch die Kollision von ionisierten Gasmolekülen erzeugt werden, und eine Metallelektrode nutzt, eingesetzt werden. Als Quelle von α-Strahlen, β-Strahlen und γ-Strahlen können spaltbare Substanzen, wie Co⁶⁰, genutzt werden. Für γ-Strahlen kann eine Vakuumröhre, die die Kollision eines beschleunigten Elektrons mit einer Anode herbeiführt, verwendet werden. Die Strahlung kann entweder einzeln oder in Kombination aus zwei oder mehr Strahlungstypen verwendet werden. Im letzteren Fall können zwei oder mehr Strahlungstypen entweder gleichzeitig oder mit bestimmten Zeitintervallen verwendet werden.

Das Härten unter Verwendung von Strahlung, insbesondere Elektronenstrahlen, wird vorzugsweise bei 15°C bis 50°C in einem Zeitraum von 5 Sekunden bis 12 Stunden, bevorzugt 8 Sekunden bis 4 Stunden, ganz besonders bevorzugt 10 Sekunden bis 1 Stunde durchgeführt. Durch die entstehende Reaktionswärme können sich die Proben auf weitaus höhere Temperaturen erwärmen.

In einer bevorzugten Ausführungsform ist die eingesetzte Strahlung zur Härtung der erfindungsgemäßen Zubereitung eine ionisierende Strahlung, bevorzugt Röntgen- und / oder Elektronenstrahlung.

In einer weiteren bevorzugten Ausführungsform erfolgt die Härtung der erfindungsgemäßen Zubereitung durch kationische Polymerisation, wobei die Polymerisation vorzugsweise durch die Einwirkung von Elektronenstrahlen initiiert wird.
Die Härtung bzw. Polymerisation mittels Elektronenstrahlen hat den Vorteil, dass die Strahlen, in Abhängigkeit von der gewählten Bestrahlungsenergie, das zu härtende Material nahezu vollständig durchdringen und so eine homogene und vollständige Härtung besser erreicht werden kann. Zudem wird durch die energiereiche Strahlung in Gegenwart von kationischen Initiatoren eine Vielzahl von Kationen für die Polymerisation freigesetzt.

Weiterhin bevorzugt ist eine härtbare Zubereitung, die bei 3 eV bis 25 MeV, insbesondere bei 6 eV bis 20 MeV, bevorzugt bei 1 keV bis 15 MeV, ganz besonders bevorzugt bei 1keV bis 10 MeV, härtbar ist.
In einer bevorzugten Ausführungsform wird die erfindungsgemäße Zubereitung mit einer frei wählbaren Bestrahlungseinheit von 1 bis 1000 kGy, vorzugsweise von 1 bis 300 kGy, besonders bevorzugt von 10 bis 200 kGy, gehärtet.
Insbesondere ist die Zubereitung bei 132 kGy in 4 Schritten ä 33 kGy härtbar.

In einer bevorzugten Ausführungsform der Erfindung kann auch eine Kombination aus thermischer und nicht-thermischer Härtung vorgenommen werden.
So kann zuerst ein nicht-thermischer Härtungsschritt durchgeführt werden und danach ein thermischer Härtungsschritt folgen.

Sollte die thermische und nicht-thermische Härtung unter Ausschluss von Sauerstoff bzw. Luft stattfinden, kann die Härtung auch unter Schutzgas erfolgen.
Als Schutzgas ist prinzipiell jedes Gas geeignet, das sich bezüglich der eingesetzten Chemikalien inert verhält (Inertgas). Dabei kommen vorzugsweise Gase wie N₂, CO₂ oder Ar in Frage. Bevorzugt sind dabei jedoch preisgünstige Gase wie CO₂ und N₂. CO₂ hat den Vorteil, dass es sich am Boden von Gefäßen sammelt und somit leicht zu handhaben ist. Geeignete Schutzgase sind insbesondere nicht giftig und nicht brennbar.

Ein weiterer Gegenstand der vorliegenden Erfindung betrifft die bereits genannte Verwendung der erfindungsgemäßen Zubereitung als Klebstoffe, Komposit-Materialien, Dichtungsmassen, Werkstoffe und/oder zur Beschichtung von Oberflächen.

In einer bevorzugten Ausführungsform kann eine solche erfindungsgemäße Zubereitung als Beschichtungsmasse auf eine Oberfläche aufgetragen und anschließend gehärtet werden.
Als Substrate sind insbesondere bevorzugt Holz, Papier, Textil, Leder, Vlies, Kunststoffe (Polycarbonat, Polymethacrylat, Polystyrol, Polyester, Polyolefin, Epoxidharze, Melaminharze, Triacetylcelluloseharze, ABS-Harze, AS-Harze, Norbornenharze usw.), Glas, Keramik, Papier, mineralische Baustoffe, wie Zement-Formsteine und Faserzementplatten, Metalle oder beschichtete Metalle geeignet. Das Substrat kann auch eine Platte, ein Film oder ein dreidimensional geformter Körper sein.

Als ein Verfahren zum Auftragen der Zubereitung (in diesem Fall als Beschichtungsmasse) auf das Substrat können unterschiedliche Applikationsmethoden angewendet werden, wie beispielsweise Spritzen, Flow-Coating, Rakeln, Streichen, Gießen, Tauchen, Tränken, Träufeln, Walzen, Schauerbeschichten oder Tauchbeschichten.
Dabei kann das zu beschichtende Substrat als solches ruhen, wobei die Applikationseinrichtung oder □anlage bewegt wird. Indes kann auch das zu beschichtende Substrat, bewegt werden, wobei die Applikationsanlage relativ zum Substrat ruht oder in geeigneter Weise bewegt wird.

Ein weiterer Gegenstand der vorliegenden Erfindung ist das bereits genannte Verfahren zur Aushärtung der erfindungsgemäßen Zubereitung, umfassend die Schritte
a. Bereitstellung einer härtbaren Zubereitung,
b. Bestrahlung der besagten Zubereitung mit Strahlung, welche ausreicht, um die besagte Zubereitung auszuhärten
und das gehärtete Produkt als solches, das durch nicht-thermisches Härten der erfindungsgemäßen Zubereitung, vorzugsweise nach dem oben genannten Verfahren, erhalten wird.

In einer bevorzugten Ausführungsform der Erfindung handelt es sich bei dem genannten gehärteten Produkt um eine Beschichtung, einen Film, einen Werkstoff, ein Komposit-Material, einen Klebstoff und/oder um eine Dichtungsmasse.

Die folgenden Beispiele erläutern die Erfindung, ohne sie jedoch darauf zu beschränken.

### Ausführungsbeispiele:

### Beispiel 1: Synthese von Silberalkenkomplexen und weiterer Komplexe mit SbF₆⁻

Als Ausgangssubstanz für die Silberalkenkomplexe wurde das kommerziell verfügbare AgSbF₆ (Aldrich, 98% oder Chempur, 95+%) gewählt. Die Synthese der Komplexe erfolgte in Anlehnung an literaturbekannte Methoden (H.W. Qinn, R.L. Van Gilder, Can. J. Chem. 1970, 48, 2435; A. Albinati, S.V. Meille, G. Carturan, J. Organomet. Chem. 1979, 182, 269; H. Masuda, M. Munakata, S. Kitagawa, J. Organomet. Chem. 1990, 391, 131; A.J. Canty, R. Colton, Inorg. Chim. Acta 1994, 220, 99). Dabei wurde AgSbF₆ in Toluol oder THF gelöst und mit einem Überschuss an Alken, vorzugsweise vier Äquivalenten umgesetzt. Die Alkenkomplexe {[Ag(Alken)ₐ]SbF₆}_{c} sind schwer löslich und fallen aus dem Reaktionsgemisch aus und können dann durch Filtration isoliert werden. Danach werden die Substanzen im Hochvakuum getrocknet.
Im Fall weiterer Metalle und Liganden wurde zunächst das jeweilige Metallchlorid mit AgSbF₆ in einem geeigneten Lösungsmittel wie z.B. Methanol umgesetzt, das ausgefallene AgCl durch Filtration abgetrennt und die resultierende Lösung des Metallhexafluoroantimonats mit dem jeweiligen Liganden umgesetzt. Danach wurde das Lösungsmittel entfernt und die Verbindung wurde im Hochvakuum getrocknet.

### Beispiel 2: Darstellung erfindungsgemäßer Flammschutzadditive

### Beispiel 2a: Typische Synthese eines Phosphoniumhexafluoroantimonats aus den entsprechenden Halogeniden durch lonenaustausch

Man löst 35 g (103 mmol) Allyltriphenylphosphoniumchlorid (CAS 18480-23-4) in 88 ml Wasser und 34 g (124 mmol) KSbF₆ (CAS 16893-92-8) in 75 ml Wasser. Die KSbF₆-Lösung wird während 15 min unter kräftigem Rühren zur Phosphoniumsalz-Lösung gegeben, wobei das Phosphoniumhexafluoroantimonat (V) ausfällt. Die Suspension wird noch 3 h bei Raumtemperatur gerührt, dann wird der ausgefallene Feststoff mittels Filtration abgetrennt. Man wäscht dreimal mit je 70 ml Wasser und anschließend mit 70 ml Diethylether. Der farblose Feststoff wird bei 50 °C im Vakuum getrocknet. Die Ausbeute beträgt 50 g (93 mmol, 90%).

### Bespiel 2b: Synthese des Flammschutzadditivs (VII) aus dem entsprechenden Chlorid

Man löst 50 g (135 mmol) (Methoxycarbonylmethyl)triphenylphosphoniumchlorid in 130 ml Wasser und 44.5 g (162 mmol) KSbF₆ in 180 ml Wasser. Die KSbF₆-Lösung wird während 15 min zur Phosphoniumchlorid-Lösung gegeben, wobei das Produkt als farbloser Niederschlag ausfällt. Man rührt noch 3 h bei Raumtemperatur, isoliert das Phosphoniumhexafluoroantimonat durch Filtration und wäscht dreimal mit je 100 ml Wasser und abschließend mit 100 ml Diethylether. Danach wird das Produkt bei 50 °C im Vakuum getrocknet. Die Ausbeute beträgt 71.3 g (125 mmol, 92%).

Schmp.: 113°C
1H NMR (DMSO-d₆): δ 3.60 (s, 3H), 5.34 (d, 2H), 7.76-7.93 (m, 15H)
31P NMR (DMSO-d₆): δ 21.6 (s)

### Beispiel 2c: Synthese des Flammschutzadditivs (X)

### a) Synthese des Diphosphoniumchlorids

Man löst 30 g (75 mmol) 1,2-Bis-(diphenylphosphino)ethan und 27.9 g (302 mmol) Chloraceton in 200 ml DMF und rührt das Reaktionsgemisch 16 h bei 120°C. Die so erhaltene Suspension wird nach dem Abkühlen auf Raumtemperatur in 200 ml Diethylether gegossen und noch 2 h gerührt. Der farblose Niederschlag wird durch Filtration abgetrennt und dreimal mit je 100 ml Diethylether gewaschen. Anschließend wird das Diphosphoniumchlorid bei 50 °C im Vakuum getrocknet. Die Ausbeute beträgt 40 g (69 mmol, 92%).

1H NMR (D₂O): δ 2.27 (s, 6H), 3.26 (d, 4H), 4.79 (d, 4H), 7.67-7.90 (m, 20H)
1H NMR (DMSO-d₆): δ 2.30 (br, 6H), 3.60 (br, 4H), 5.45 (br, 4H), 7.53-7.95 (m, 20H)
31P NMR (DMSO-d₆): δ 25.5 (s)

### b) Synthese des Diphosphoniumhexafluoroantimonats

Man löst 18.2 g (31 mmol) Diphosphoniumchlorid in 560 ml Wasser und 15.9 g (58 mmol) KSbF₆ in 55 ml Wasser. Die Lösung des Hexafluoroantimonats wird während 15 min zur Lösung des Diphosphoniumchlorids gegeben, wobei ein farbloser Niederschlag ausfällt. Es wird noch 3 h bei Raumtemperatur gerührt, dann wird das Produkt mittels Filtration abgetrennt. Man wäscht zweimal mit je 100 ml Wasser, dann mit 100 ml Diethylether und trocknet bei 50°C im Vakuum. Die Ausbeute beträgt 25 g (25 mmol, 81%).

Schmp.: 196-202 °C
1H NMR (DMSO-d₆): δ 2.29 (s, 6H), 3.38 (d, 4H), 5.13 (d, 4H), 7.70-7.88 (m, 20H)
31P NMR (DMSO-d₆): δ 25.4 (s)

### Beispiel 2d: Synthese des Flammschutzadditivs (XI)

### a) Synthese des Tetraphosphoniumchlorids

Man löst 10 g (25 mmol) 1,2-Bis-(diphenylphosphino)ethan in 110 ml DMF und erwärmt auf 70 °C. Zu dieser Lösung wird während 15 min eine Lösung von 17.5 g (100 mmol) α,αDichlor-p-xylol in 110 ml DMF gegeben. Danach wird die Temperatur auf 120°C erhöht und es wird noch 2 h bei dieser Temperatur gerührt. Dabei fällt ein farbloser Niederschlag aus, der abfiltriert und dreimal mit je 25 ml DMF gewaschen wird. Der Feststoff wird in 100 ml DMF aufgenommen und es wird eine Lösung von 26.2 g (100 mmol) Triphenylphosphin in 40 ml DMF zugegeben. Das Reaktiönsgemisch wird 16 h bei 140 °C gerührt. Nach dem Abkühlen auf Raumtemperatur wird zunächst abdekantiert dann abzentrifugiert und das Produkt wird dreimal mit je 40 ml DMF und zweimal mit je 25 ml Diethylether gewaschen. Abschließend wird im Vakuum bei 50°C getrocknet und die Ausbeute beträgt 28 g (22 mmol, 88%).

1H NMR (D₂O):δ 3.04 (br, 4H), 4.45 (br, 4H), 4.64 (d, 4H) 6.54 (m, 8H), 7.45-7.83 (m, 50H)
31P NMR (D₂O): δ 23.4 (m), 29.1 (m)

### b) Synthese des Teraphosphoniumhexafluoroantimonats

Man löst 10 g (8 mmol) des Tetraphosphoniumchlorids in 400 ml Wasser und 17 g (62 mmol) KSbF₆ in 60 ml Wasser. Die KSbF₆-Lösung wird während 15 min zur Lösung des Tetraphosphoniumchlorids gegeben, wobei das Produkt als farbloser Niederschlag ausfällt. Man rührt noch 2 h bei Raumtemperatur, filtriert ab und wäscht zweimal mit je 100 ml Wasser und einmal mit 50 ml Diethylether. Anschließend wird das Produkt bei 50 °C im Vakuum getrocknet. Die Ausbeute beträgt 14.2 g (7 mmol, 87%).

Schmp.: 279-288 °C (Zersetzung)
1H NMR (DMSO-d₆): δ 3.15 (br, 4H), 4.73 (br, 4H), 5.03 (d, 4H), 6.58 (m, 8H), 7.56-7.92 (m, 50H)
31P NMR (DMSO-d₆): δ 24.2 (m), 29.7 (m)

### Beispiel 2d: Synthese des Flammschutzadditivs (XII)

### a) Synthese des Polyphosphoniumchlorids

Man löst 24.8 g (62 mmol) 1,2-Bis-(diphenylphosphino)ethan in 130 ml DMF und erwärmt auf 90 °C. Dann wird eine Lösung von 10.9 g (62 mmol) α,α□Dichlor-p-xylol in 100 ml DMF während 15 min zugetropft. Man erwärmt auf 120 °C und rührt noch 3 h bei dieser Temperatur, wobei das Produkt als farbloser Niederschlag ausfällt. Es wird abfiltriert und zunächst mit 60 ml DMF dann mit 60 ml Diethylether gewaschen. Abschließend wird die Substanz bei 50 °C im Vakuum getrocknet und es werden 36.2 g Rohprodukt, das noch DMF enthält, erhalten.

1H NMR (D₂O): δ 2.90 (br, 4H), 4.32 (br, 4H), 6.36 (m, br, 4H), 7.44-7.89 (m, br, 20H)
31P NMR (D₂O): δ 29.2 (s)

### b) Synthese des Polyphosphoniumhexafluoroantimonats

Man löst 30 g Polyphosphoniumchlorid in 300 ml Wasser und 35 g (135 mmol) NaSbF6 in 500 ml Wasser. Die NaSbF6-Lösung wird während 15 min zur Lösung des Polyphosphoniumchlorids gegeben, wobei das Produkt als farbloser Niederschlag ausfällt. Man rührt noch 16 h bei 50 °C und filtriert dann ab. Der Niederschlag wird mit 250 ml Wasser und 250 ml Diethylether gewaschen und bei 50 °C im Vakuum getrocknet. Die Ausbeute beträgt 39 g (77%).

Schmp.: 255-268 °C (Zersetzung)
1H NMR (DMSO-d₆): δ 2.9 (br, 4H), 4.53 (br, 4H), 6.32 (m, br, 4H), 7.34-7.86 (m, br, 20H)
31P NMR (DMSO-d₆): δ 29.8 (s)

### Beispiel 3: Darstellung der erfindungsgemäßen härtbaren Zubereitung und Strahlungshärtung

### a) Allgemeine Vorschrift zur Darstellung der erfindungsgemäßen härtbaren Zubereitung

Eine Mischung aus dem erfindungsgemäßen Epoxidharzsystem (40 Gew.-% bis 95 Gew.-%), dem erfindungsgemäßen Flammschutzmittel (0,01 Gew.-% bis 50 Gew.-%) und dem erfindungsgemäßen Initiator (0,1 Gew.-% bis 10 Gew.-%) und gegebenenfalls weiterer Additive wird unter Rühren und gegebenenfalls leichter Wärmezufuhr innerhalb von 1 bis 100 min homogenisiert.

### b) Beispielhafte Darstellung verschiedener Zubereitungen

Das Epoxidharz (Novolak DEN 431 der Fa. Dow Chemical Co., 100 Gewichtsteile) und das jeweilige Hexafluoroantimonat der Phosphoniumsalze als Flammschutzadditiv (10 oder 20 Gewichtsteile) gemäß Formel V bis XII werden zusammengegeben und unter Rühren (1-2 Minuten) bei 50 °C vermengt. Der Photoinitiator {[Ag(1,7-Octadien)₁.₅](SbF₆)}ₚ (2 Gewichtsteile) wird anschließend bei 50 °C zugegeben und die Zubereitung unter Rühren homogenisiert.

### c) Strahlungshärtung

Die Zubereitungen werden in Aluminiumschälchen mit den Abmessungen 7×3,5×3 cm (LängexBreitexHöhe) transferiert (3 mm Probendicke) und in einem Vakuumtrockenschrank bei 60°C und unter einem Druck von 15 mbar entgast. Die Aushärtung der Proben erfolgt durch Elektronenbestrahlung an einem 200kW-Rhodotron-Beschleuniger mit einer Elektronenstrahlenergie von 10 MeV. Dabei wird die Gesamtdosis von 132 kGy in 33 kGy-Schritten eingebracht.

### Beispiel 4: Untersuchungen zum Brandverhalten mittels UL94-VB-Test

Die elektronenstrahlgehärteten Harzplatten (3 mm Probendicke) werden entformt, zersägt und mit Hilfe des UL94-Vertikalbrenntests in einer HVUL2Brandtestkammer der Fa. Atlas auf flammgehemmte Eigenschaften hin untersucht. Es wurden 5 unabhängige Messungen mit jeweils dem gleichen Material durchgeführt. Die Ergebnisse der Brenntests sind in den Tabellen 1 bis 5 zusammengefasst. Vergleichsdaten mit Platten ohne Phosphoniumsatzadditiv sind in Tabelle 1 enthalten.

**Tab. 1. UL94-VB-Test mit elektronenstrahlgehärteten Proben ohne Flammschutzadditiv (DEN431:{[Ag(1,7-Octadien)_{1.51}SbF₆}ₚ = 100:2; 10 MeV, 4×33 kGy)**

| Probendicke: 7 ± 1 mm | | |
|---|---|---|
| Messung | Gesamtbrenndauer (s) | Klassifizierung |
| 1 | > 30 | nicht klassifiziert |
| 2 | > 30 | |
| 3 | > 30 | |
| 4 | > 30 | |
| 5 | > 30 | |

**Tab. 2. UL94-VB-Test mit Verbindung (V)-haltigen (SbF₆ als Gegenion), elektronenstrahlgehärteten Proben (DEN431:(V):{[Ag(1,7-Octadien)_{1.5}]SbF₆}p = 100:20:2; 10 MeV, 4x33 kGy)**

| Probendicke: 7 ± 1 mm | | | Probendicke: 3 ± 1 mm | | |
|---|---|---|---|---|---|
| Messung | Gesamtbrenndauer (s) | Klassifizierung | Messung | Gesamtbrenndauer (s) | Klassifizierung |
| 1 | 5.6 | V0 | 1 | 12.6 | V1 |
| 2 | 3.2 | | 2 | 9.8 | |
| 3 | 6.5 | | 3 | 4.4 | |
| 4 | 6.5 | | 4 | 17.9 | |
| 5 | 20.3 | | 5 | 7.4 | |

**Tab. 3. UL94-VB-Test mit Verbindung (V1)-haltigen (SbF₆ als Gegenion), elektronenstrahlgehärteten Proben (DEN431:(VI):{[Ag(1,7-Octadien)_{1.5}]SbF₆}ₚ = 100:20:2; 10 MeV, 4×33 kGy)**

| Probendicke: 7 ± 1 mm | | |
|---|---|---|
| Messung | Gesamtbrenndauer (s) | Klassifizierung |
| 1 | 3.0 | V1 |
| 2 | 5.2 | |
| 3 | 14.4 | |
| 4 | 21.5 | |
| 5 | 17.8 | |

**Tab. 4. UL94-VB-Test mit Verbindung (IX)-haltigen (SbF₆ als Gegenion), elektronenstrahlgehärteten Proben (DEN431:(IX):{[Ag(1,7-Octadien)_{1.5}]SbF₆}ₚ = 100:20:2; 10 MeV, 4×33 kGy)**

| Probendicke: 7 ± 1 mm | | | Probendicke: 3 ± 1 mm | | |
|---|---|---|---|---|---|
| Messung | Gesamtbrenndauer (s) | Klassifizierung | Probe Nr. | Gesamtbrenndauer (s) | Klassifizierung |
| 1 | 16.7 | V1 | 1 | 20.2 | V1 |
| 2 | 14.2 | | 2 | 6.6 | |
| 3 | 11.7 | | 3 | 7.5 | |
| 4 | 6.7 | | 4 | 9.5 | |
| 5 | 9.8 | | 5 | 29.3 | |

**Tab. 5. UL94-VB-Test mit Verbindung (X)-haltigen (SbF₆ als Gegenion), elektronenstrahlgehärteten Proben (DEN431:(X):{[Ag(1,7-Octadien)_{1.5}]SbF₆}ₚ = 100:20:2; 10 MeV, 4×33 kGy)**

| Probendicke: 7 ± 1 mm | | |
|---|---|---|
| Probe Nr. | Gesamtbrenndauer (s) | Klassifizierung |
| 1 | 36.0 | V1 |
| 2 | 7.5 | |
| 3 | 6.5 | |
| 4 | 3.9 | |
| 5 | 16.5 | |

**Tab. 6. UL94-VB-Test mit Flammschutzadditiv-haltigen, elektronenstrahlgehärteten Proben, wobei die Flammschutzadditive in verschiedenen Konzentrationen zugesetzt werden (DEN431:Additiv:{[Ag(1,7-Octadien)_{1.5}]SbF₆}ₚ = 100: 20 bzw. 10: 2; 10 MeV, 4x33 kGy)**

| Flammschutzadditiv | UL94-Vertikalbrenntest Klassifizerung |
|---|---|
| 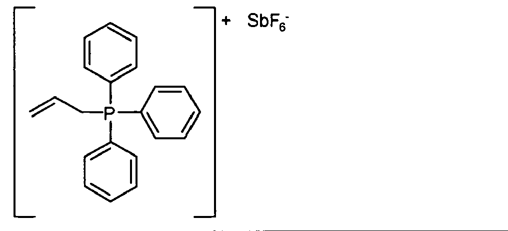 | V0/V1^{[a]} (20 Gewichtsteile) V1^{[b]} (10 Gewichtsteile) |
| 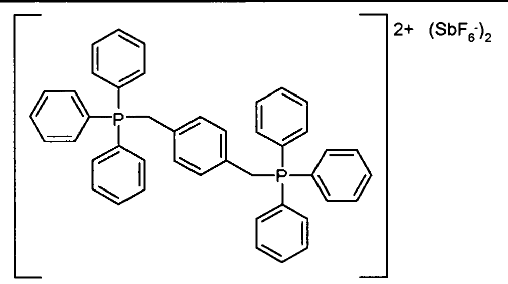 | V1^{[a]} (20 Gewichtsteile) V1^{[b]} (10 Gewichtsteile) |

| | |
|---|---|
| [a] Mittelwert aus fünf unabhängigen Bestimmungen mit dem jeweils gleichen Material. [b] Mittelwert aus vier unabhängigen Bestimmungen mit dem jeweils gleichen Material. | |

Die Ergebnisse des anspruchsvollen UL94-Vertikalbrenntest zeigen, dass die erfindungsgemäßen Phosphoniumsalze mit Hexafluoroantimonat als Gegenion leistungsfähige Flammschutzadditive für strahlenhärtende Harzsysteme darstellen.
Alle untersuchten Epoxidharzsysteme besitzen eindeutig flammhemmende Eigenschaften und erreichen mindestens die Gesamtklassifizierung V1. Die Phospor- und Antimongehalte in der Harzformulierungen sind dabei sehr gering und auch bei niedrigen Additivgehalten (10 bis 20 Gewichtsanteile im Harz) und ohne den Zusatz weiterer Flammschutzmittel (Synergisten) werden sehr gute Ergebnisse erzielt.

## Patentansprüche

1. Verwendung mindestens einer Verbindung der allgemeinen Formel (I),
KA (I)
mit K = Mono-, Di-, Oligo- und/oder Polyphosphoniumkation und A = schwach-koordinierendes Anion, wobei das schwach-koordinierende Anion A ausgewählt wird aus Hexafluoroantimonat (SbF₆⁻), Hexafluorophosphat (PF₆⁻), Bortetrafluorid (BF₄), Hexafluoroaluminat (AIF₆³⁻), Trifluormethansulfonat (CF₃SO₃⁻), Hexafluoroarsenat (AsF₆⁻), Tetrakis(pentafluorphenylborat) (B[C₆F₅]₄⁻), Tetrakis[3.5-bis(trifluormethyl)phenyl]borat (B[C₆H₃(CF₃)₂]₄⁻), Tetraphenylborat (B[C₆H₅]₄⁻), Hexafluorotitanat (TiF₆²⁻), Pentachlorotitanat (TICl₅⁻), Pentachlorostannat (SnCl₅), Hexafluorogermanat (GeF₆²⁻), Hexafluorosilicat (SiF₆²-), Hexafluoronickelat (NiF₆²⁻) oder Hexafluorozirkonat (ZrF₆²⁻) als Flammschutzmittel für Harzsysteme.

2. Verwendung nach Anspruch 1, **dadurch gekennzeichnet, dass** es sich bei dem Harzsystem um ein nicht-thermisch härtbares Epoxidharzsystem handelt.

3. Verwendung nach mindestens einem der Ansprüche 1 oder 2, **dadurch gekennzeichnet, dass** das Monophosphoniumkation ausgewählt wird aus Verbindungen der allgemeinen 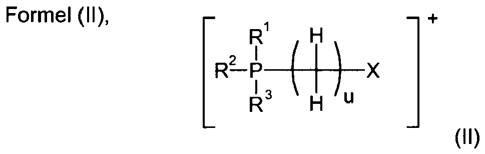 wobei u eine ganze Zahl zwischen 0 und 18 ist, R¹, R² und R³ unabhängig voneinander für eine substituierte oder unsubstituierte C₁₋₁₂- Alkyl-, Cycloalkyl-, Alkenyl-, Alkinyl-, Arylalkyl- oder Arylgruppe, insbesondere eine C₆₋₁₀-Arylgruppe, stehen und X für eine C₁₋₁₂-Alkyl-, Alkenyl-, Cycloalkyl-, Arylalkyl-, Aryl-, Carbonsäure- oder Carbonsäureestergruppe oder eine Acylgruppe der allgemeinen Formel R⁴(C=O)-, mit R⁴ = substituierte oder unsubstituierte C₁₋₁₂- Alkyl-, Cycloalkyl-, Arylalkyl- oder Arylgruppe, steht.

4. Verwendung nach mindestens einem der Ansprüche 1 oder 2, **dadurch gekennzeichnet, dass** das Diphosphoniumkation ausgewählt wird aus Verbindungen der allgemeinen 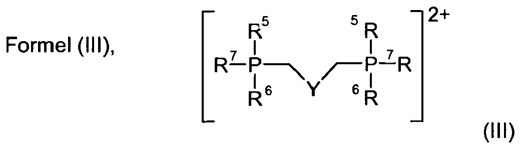 wobei R⁵ und R⁶ unabhängig voneinander für eine substituierte oder unsubstituierte C₁₋₁₂-Alkyl-, Cycloalkyl-, Alkenyl-, Alkinyl-, Arylalkyl- oder Arylgruppe, insbesondere eine C₆₋₁₀-Arylgruppe stehen, R⁷ für eine substituierte oder unsubstituierte C₁₋₁₂- Alkyl-, Cycloalkyl-, Alkenyl-, Alkinyl-, Arylalkyl- oder Arylgruppe oder für eine Struktur der allgemeinen Formel R⁸C=O(CH₂)_{u'}-, mit u' = 1 bis 10 und R⁸ = substituierte oder unsubstituierte C₁₋₁₂- Alkyl-, Cycloalkyl-, Arylalkyl- oder Arylgruppe, steht und Y für eine kovalente Bindung oder eine substituierte oder unsubstituierte C₁₋₁₂- Alkylen-, Cycloalkylen-, Alkenylen-, Arylalkylen- oder Arylengruppe steht.

5. Verwendung nach mindestens einem der Ansprüche 1 oder 2, **dadurch gekennzeichnet, dass** das Oligo- oder Polyphosphoniumkation ausgewählt wird aus Verbindungen der allgemeinen 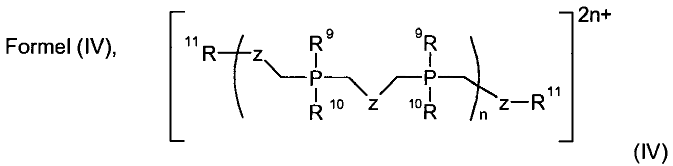 wobei n eine ganze Zahl zwischen 1 und 20000000 ist, R⁹ und R¹⁰ unabhängig voneinander für eine substituierte oder unsubstituierte C₁₋₁₂- Alkyl-, Cycloalkyl-, Alkenyl-, Alkinyl-, Arylalkyl- oder Arylgruppe, insbesondere eine C₆₋₁₀-Arylgruppe stehen, z für eine kovalente Bindung oder eine substituierte oder unsubstituierte C₁₋₂- Alkylen-, Cycloalkylen-, Alkenylen-, Arylalkylen- oder Arylengruppe steht und R¹¹ für eine Struktur der allgemeinen Formel (R¹²)P(CH₂)ⱼ- mit j = 0 bis 10 und R¹² = substituierte oder unsubstituierte C₁₋₁₂-Alkyl-, Cycloalkyl-, Arylalkyl- oder Arylgruppe, insbesondere eine C₆₋₁₀-Arylgruppe, steht.

6. Verwendung nach mindestens einem der Ansprüche 1 bis 5, **dadurch gekennzeichnet, dass** das Flammschutzmittel ausgewählt ist aus Verbindungen gemäß Formel (V) bis (XII) 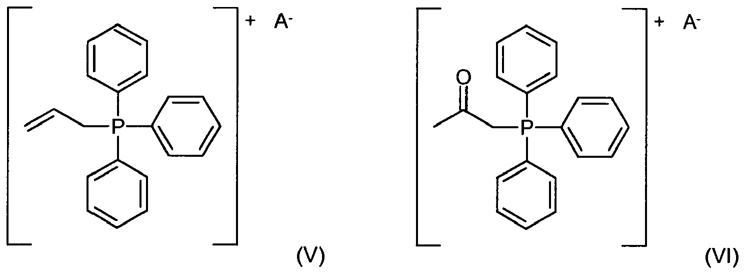 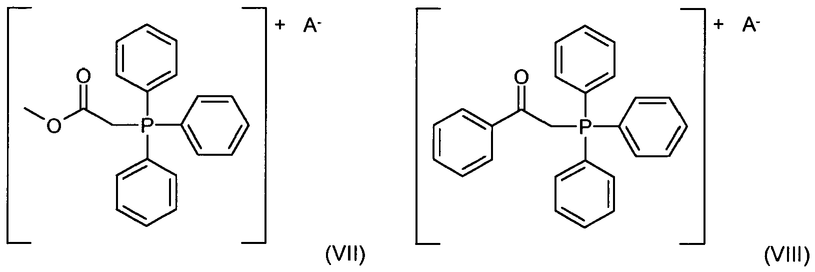 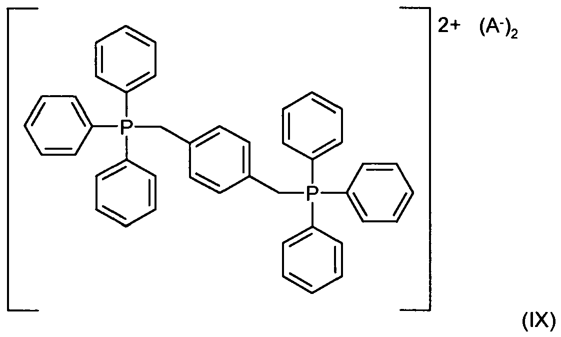 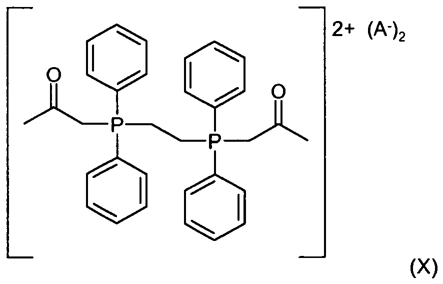 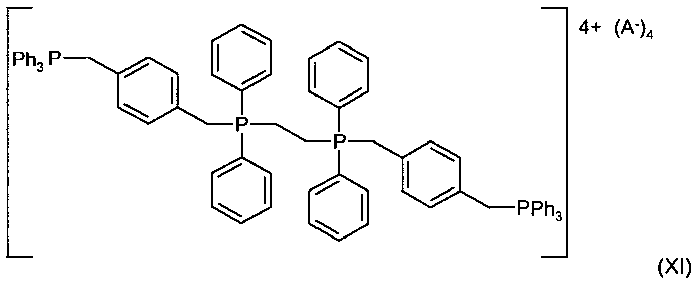 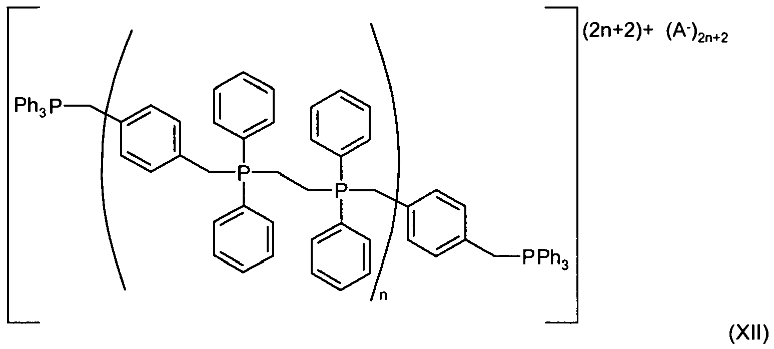 wobei n in Formel (XII) eine ganze Zahl zwischen 1 und 20000000 ist.

7. Verwendung nach mindestens einem der Ansprüche 1 bis 6, **dadurch gekennzeichnet, dass** das schwach-koordinierende Anion A Hexafluoroantimonat (SbF₆⁻) ist.

8. Die Di-, Oligo- oder Polyphosphoniumkationen der Verbindungen gemäß Formel (X) bis (XII) in Anspruch 6 und die Hexafluoroantimonate der Verbindungen gemäß Formel (VII), (X), (XI) und (XII) in Anspruch 6.

9. Härtbare Zubereitung, enthaltend
a) ein Epoxidharzsystem,
b) einen Initiator ausgewählt aus den folgenden Verbindungen oder deren Mischungen:
i) Verbindungen der allgemeinen Formel (XV),
{[M(L)ₐ]A_{b}}_{c} (XV),
mit M = Metallkation, L = Ligand, A = schwach-koordinierendes Anion, a = 1 bis 10, bevorzugt 1 bis 6, besonders bevorzugt 1 bis 4, b = 1 bis 10, bevorzugt 1 bis 6, besonders bevorzugt 1 bis 3 und c = 1 bis 20000000, bevorzugt 1 bis 20000, besonders bevorzugt 1 bis 1000, ganz besonders bevorzugt 1 bis 500, insbesondere 1 bis 300, wobei a, b und c ganze Zahlen und Zahlenbereiche darstellen können und a zusätzlich auch nicht ganze Zahlen darstellen kann,
ii) Verbindungen der allgemeinen Formel (XVI),
IA (XVI)
mit I = Diaryliodoniumsalz und A = schwach-koordinierendes Anion oder
iii) Verbindungen der allgemeinen Formel (XVII),
SA (XVII)
mit S = Triarylsulfoniumsalz und A = schwach-koordinierendes Anion,
c) mindestens ein Flammschutzmittel der allgemeinen Formel (I)
KA (I),
mit K = Mono-, Di-, Oligo- und/oder Polyphosphoniumkation und A = schwach-koordinierendes Anion,
wobei das schwach-koordinierende Anion A des Initiators und des Flammschutzmittels ausgewählt wird aus Hexafluoroantimonat (SbF₆⁻), Hexafluorophosphat (PF₆⁻), Bortetrafluorid (BF₄⁻), Hexafluoroaluminat (AlF₆³⁻), Trifluormethansulfonat (CF₃SO₃), Hexafluoroarsenat (AsF₆⁻), Tetrakis(pentafluorphenylborat) (B[C₆F₅]₄⁻), Tetrakis[3,5-bis(trifluormethyl)phenyl]borat (B[C₆H₃(CF₃)₂]₄⁻, Tetraphenylborat (B[C₆H₅]₄⁻), Hexafluorotitanat (TiF₆²⁻), Pentachlorotitanat (TlCl₅⁻), Pentachlorostannat (SnCl₅⁻), Hexafluorogermanat (GeF₆²⁻), Hexafluorosilicat (Si F₆²⁻), Hexafluoronickelat (NiF₆²⁻) oder Hexafluorozirkonat (ZrF₆²⁻).

10. Zubereitung nach Anspruch 9, **dadurch gekennzeichnet, dass** das schwach-koordinierende Anion A des Initiators und/oder des Flammschutzmittels Hexafluoroantimonat (SbF₆⁻) ist.

11. Zubereitung nach mindestens einem der Ansprüche 9 oder 10, **dadurch gekennzeichnet, dass** der Initiator gemäß Formel (XV) ausgewählt ist aus
[Ag(Cyclohexen)₁₋₄]SbF₆, [Ag(Cycloocten)₁₋₄]SbF₆, [Ag(Cyclododecen)₁₋₄]SbF₆,
[Ag(trans-2-Octen)₁₋₄] [Ag(Styrol)₁₋₄]SbF₆,
[Ag(5-Norbornen-2-carbonsäure)₁₋₄]SbF₆, Ag(1,5-Hexadien)₁₋₄]SbF₆}₁₋ₚ,
{[Ag(1,7-Octadien)_{1.5}]SbF₆}ₚ, {[Ag(1,7-Octadien)_{1.5}]SbF₆}₁₀₀₀, {[Ag(1,7-Octadien)_{1.5}]SbF₆}₅₀₀,
{[Ag(1,9-Decadien)₁₋₄]SbF₆}₁₋ₚ, {[Ag(Sorbinsäureethylester)₁₋₄]SbF₆}₁₋ₚ,
[Ag(1,3-Cyclohexadien)₁₋₄]SbF₆)₁₋ₚ, {[Ag(1,3-Cyclooctadien)₁₋₄]SbF₆}₁₋ₚ,
Ag(1,5-Cyclooctadien)₂]SbF₆, {[Ag(Norbornadien)₁₋₄]SbF₆}₁₋ₚ,
{[Ag(Dicyclopentadien)₁₋₄]SbF₆}₁₋ₚ, [Ag(Cycloheptatrien)₁₋₄]SbF₆}₁₋ₚ,
([Cu(1,7-Octadien)₁₋₄]SbF₆}₁₋ₚ, [Cu(1,5-Cyclooctadien)₂]SbF₆, [Cu(15-Krone-5)]SbF₆,
[Fe(15-Krone-5)](SbF₆)₃, [Fe(18-Krone-6)](SbF₆)₃, [Mg(15-Krone-5)](SbF₆)₂,
[Co(15-Krone-5)](SbF₆)₂, [Ag(1R-(-)-Nopol)₁₋₄]SbF₆, [Ag(Allylglycidylether)₁₋₄]SbF₆,
{[Ag(trans,trans,cis-1,5,9-Cyclododecatrien)₁₋₄]SbF₆}_{1-P},
{[Ag(trans,trans,trans-1,5,9-Cyclododecatrien)₁₋₄] SbF₆}₁₋ₚ,
([Ag(Cyclooctatetraen)₁₋₄]SbF6}₁₋ₚ, {[Ag(Squalen)₁₋₄]SbF₆}₁₋ₚ und/oder aus deren beliebigen Mischungen, wobei p = 20000000 ist,
und/oder
der Initiator gemäß Formel (XVI) ausgewählt wird aus Verbindungen gemäß Formel (XVIII), 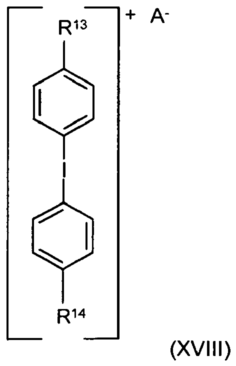 wobei R¹³ und R¹⁴ unabhängig voneinander ausgewählt werden aus der Gruppe bestehend aus Wasserstoff, Methyl, Ethyl, n-Propyl, Isopropyl, n-Butyl, tert-Butyl, Cl, Br, OCᵢH2ᵢ+1, OCH₂CH(CH3)CᵢH2ᵢ₊₁, OCH₂CH(C₂H₅)CᵢH2ᵢ₊₁, OCH₂CH(OH)CᵢH2ᵢ₊₁, OCH₂CO₂CᵢH2ᵢ₊₁, OCH(CH₃)CO₂CᵢH2ᵢ₊₁, OCH(C₂H₅)CO₂CᵢH2ᵢ₊₁, und i eine ganze Zahl zwischen 0 und 18 ist; und/oder
der Initiator gemäß Formel (XVII) ausgewählt wird aus Verbindungen gemäß Formel (XIX) und/oder Formel (XX), 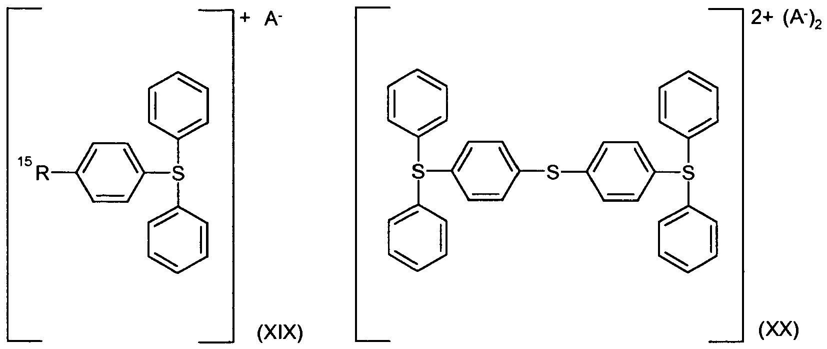 wobei R¹⁵ ausgewählt wird aus der Gruppe bestehend aus Wasserstoff, Methyl, Ethyl, n-Propyl, Isopropyl, n-Butyl, tert-Butyl, Phenylsulfid (PhS) und Phenoxy (PhO).

12. Zubereitung nach mindestens einem der Ansprüche 9 bis 11, **dadurch gekennzeichnet, dass** als Flammschutzmittel eine gemäß einem der Ansprüche 3 bis 7 zu verwendende Verbindung eingesetzt wird.

13. Verwendung einer Zubereitung gemäß Anspruch 9 bis 12 als Klebstoff, Komposit-Material, Dichtungsmasse, Werkstoff und/oder zur Beschichtung von Oberflächen.

14. Gehärtetes Produkt, das durch nicht-thermisches Härten einer Zubereitung nach einem der Ansprüche 9 bis 12 hergestellt wird.

15. Gehärtetes Produkt nach Anspruch 14, **dadurch gekennzeichnet, dass** das Produkt eine Beschichtung, ein Film, ein Werkstoff, ein Komposit-Material, ein Klebstoff und/oder eine Dichtungsmasse ist.

## Claims

1. The use of at least one compound of general formula (I),
KA (I)
with K = a mono-, di-, oligo- and/or poly-phosphonium cation and A = a weakly coordinating anion, wherein the weakly coordinating anion is selected from hexafluoroantimonate (SbF₆⁻), hexafluorophosphate (PF₆⁻), borotetrafluoride (BF₄⁻), hexafluoroaluminate (AIF₆³⁻), trifluoromethane-sulfonate (CF₃SO₃⁻), hexafluoroarsenate (AsF₆⁻), tetrakis(pentafluoro-phenylborate) (B[C₆F₅]₄⁻), tetrakis[3,5-bis(trifluoromethyl)-phenyl]borate (B[C₆H₃(CF₃)₂]₄-), tetraphenylborate (B[C₆H₅]₄⁻), hexafluorotitanate (TiF₆²⁻), pentachlorotitanate (TiCl₅⁻), pentachlorostannate (SnCl₅⁻), hexafluorogermanate (GeF₆²⁻), hexafluorosilicate (SiF₆²⁻), hexafluoronickelate (NiF₆²⁻) or hexafluorozirconate (ZrF₆²⁻) as a flame retardant for resin systems.

2. The use according to claim 1, **characterized in that** the resin system, is a non-thermally curable epoxy resin system.

3. The use according to at least one of the claims 1 or 2, **characterized in that** the monophosphonium cation is selected from compounds of general formula (II), 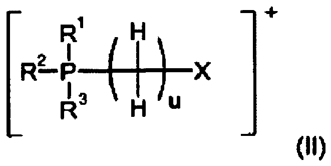 wherein u is an integer between 0 and 18, R¹, R² and R³ represent independently of each other a substituted or non-substituted C₁-C₁₂ alkyl, cycloalkyl, alkenyl, alkynyl, arylalkyl or aryl group, in particular a C₆-C₁₀ aryl group, and X represents a C₁-C₁₂ alkyl, alkenyl, cycloalkyl, arylalkyl, aryl, carboxylic acid or carboxylic acid ester group or an acyl group of general formula R⁴(C=O)-, with R⁴ = a substituted or non-substituted C₁-C₁₂ alkyl, cycloalkyl, arylalkyl or aryl group.

4. The use according to at least one of the claims 1 or 2, **characterized in that** the diphosphonium cation is selected from compounds of general formula (III), 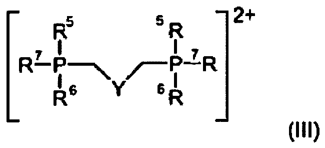 wherein R⁵ and R⁶ independently of each other represent a substituted or non-substituted C₁-C₁₂ alkyl, cycloalkyl, alkenyl, alkynyl, arylalkyl or aryl group, in particular a C₆-C₁₀ aryl group, R⁷ represents a substituted or non-substituted C₁-C₁₂ alkyl, cycloalkyl, alkenyl, alkynyl, arylalkyl or aryl group or a structure of general formula R⁸=O(CH₂)_{u'}-, with u' = 1 to 10 and R⁸ = a substituted or non-substituted C₁-C₁₂ alkyl, cycloalkyl, arylalkyl or aryl group, and Y represents a covalent bond or a substituted or non-substituted C₁-C₁₂ alkylene, cycloalkylene, alkenylene, arylalkylene or arylene group.

5. The use according to at least one of the claims 1 or 2, **characterized in that** the oligo- or poly-phosphonium cation is selected from compounds of general formula (IV), 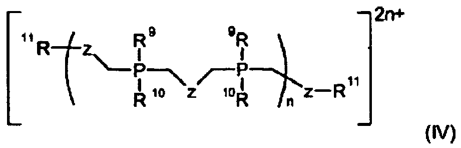 wherein n is an integer between 1 and 20,000,000, R⁹ and R¹⁰ independently of each other represent a substituted or non-substituted C₁-C₁₂ alkyl, cycloalkyl, alkenyl, alkynyl, arylalkyl or aryl group, in particular a C₆-C₁₀ aryl group, z represents a covalent bond or a substituted or non-substituted C₁-C₁₂ alkylene_{;} cycloalkylene, alkenylene, arylalkylene or arylene group and R¹¹ represents a structure of general formula (R¹²)₃P(CH₂)ⱼ with j = 0 to 10 and R¹² = a substituted or non-substituted C₁-C₁₂ alkyl, cycloalkyl, arylalkyl or aryl group, in particular a C₆-C₁₀ aryl group.

6. The use according to at least one of claims 1 to 5, **characterized in that** the flame retardant is selected from compounds according to formulae (V) to (XII) 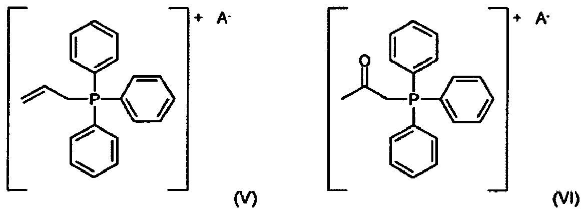 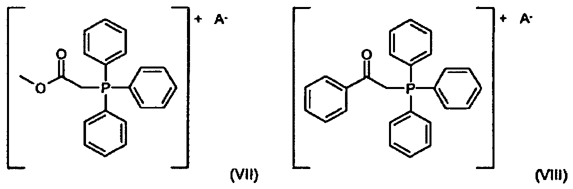 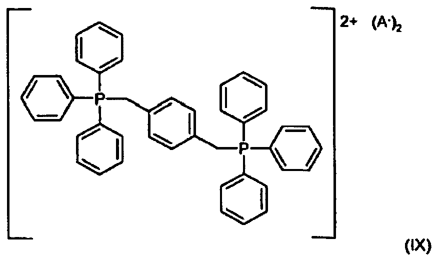 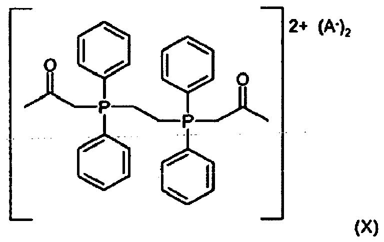 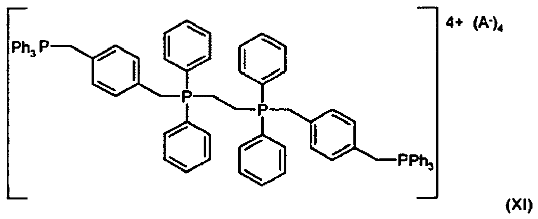 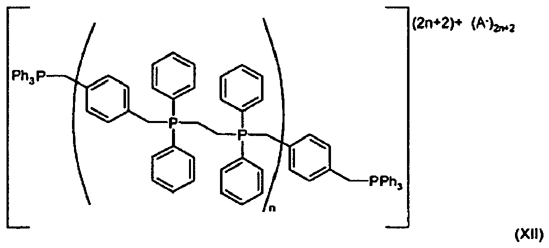 wherein n in formula (XII) is an integer between 1 and 20,000,000.

7. The use according to at least one of claims 1 to 6, **characterized in that** the weakly coordinating anion A is a hexafluoroantimonate (SbF₆⁻).

8. The di-, oligo- or poly-phosphonium cations of the compounds according to formulae (X) to (XII) in claim 6 and the hexafluoroantimonates of the compounds according to formulae (VII), (X), (XI) and (XII) in claim 6.

9. A curable preparation, containing
a) an epoxy resin system
b) an initiator selected from the following compounds or mixtures thereof:
i) compounds of general formula (XV)
{[M(L)ₐ]A_{b}}_{c} (XV)
with M = metal cation, L = ligand, A = weakly coordinating anion, a = 1 to 10, preferably 1 to 6, more preferably 1 to 4, b = 1 to 10, preferably 1 to 6, more preferably 1 to 3, and c = 1 to 20,000,000, preferably 1 to 20,000, more preferably 1 to 1,000, most preferably 1 to 500, in particular 1 to 300, wherein a, b and c may represent integers or number ranges and further a may also represent non-integers,
ii) compounds of general formula (XVI)
IA (XVI)
with I = diaryliodonium salt and A = weakly coordinating anion, or
iii) compounds of general formula (XVII)
SA (XVII)
with S = triarylsulfonium salt and A = weakly coordinating anion,
c) at least one flame retardant of general formula (I)
KA (I),
with K = mono, di-, oligo- and/or poly-phosphonium cation and A = weakly coordinating anion,
wherein the weakly coordinating anion A of the initiator and of the flame retardant is selected from hexafluoroantimonate (SbF₆⁻), hexafluorophosphate (PF₆⁻), borotetrafluoride (BF₄⁻), hexafluoroaluminate (AlF₆³⁻), trifluoromethane-sulfonate (CF₃SO₃⁻), hexafluoroarsenate (AsF₆⁻), tetrakis(pentafluoro-phenylborate) (B[C₆F₅]₄⁻), tetrakis[3,5-bis(trifluoromethyl)-phenyl]borate (B[C₆H₃(CF₃]₄⁻), tetraphenylborate (B[C₆H₅]₄⁻), hexafluorotitanate (TiF₆²⁻), pentachlorotitanate (TiCl₅⁻), pentachlorostannate (SnCl₅⁻), hexafluorogermanate (GeF₆²⁻), hexafluorosilicate (SiF₆²⁻), hexafluoronickelate (NiF6²⁻) or hexafluorozirconate (ZrF₆²⁻).

10. The preparation according to claim 9, **characterized in that** the weakly coordinating anion A of the initiator and/or of the flame retardant is hexafluoroantimonate (SbF₆⁻).

11. The preparation according to one of claims 9 or 10, **characterized in that** the initiator according to formula (XV) is selected from
[Ag(cyclohexene)₁₋₄]SbF₆, [Ag(cyclooctene)₁₋₄]SbF₆, [Ag(cyclododecene)₁₋₄]SbF₆, [Ag(trans-2-octene)]SbF₆, [Ag(styrene)₁₋₄]SbF₆, [Ag(5-norbornene-2-carboxylic acid)₁₋₄]SbF₆, {[Ag(1,5-hexadiene)₁₋₄]SbFf₆}₁₋ₚ, {[Ag(1,7-octadiene)_{1.51}SbF₆}ₚ, {[Ag(1,7-Octadiene)_{1.5}]SbF₆}₁₀₀₀, {[Ag(1,7-Octadiene)1.5]SbF₆}₅₀₀, {[Ag(1,9-decadiene)_{1-4]}SbF₆}₁₋ₚ, {[Ag(sorbic acid ethyl ester)₁₋₄]SbF₆}₁₋ₚ, {[Ag(1,3-cyclohexadiene)₁₋₄]SbF₆}₁₋ₚ, {[Ag(1,3-cyclooctadiene)₁₋₄]SbF₆}₁₋ₚ, [Ag(1,5-cyclooctadiene)₂]SbF₆, {[Ag(norbornadiene)₁₋₄]SbF₆}₁₋ₚ, {[Ag(dicyclopentadiene)₁₋₄SbF₆}₁₋ₚ, {[Ag(cycloheptatriene)₁₋₄SbF₆}₁₋ₚ, {[Cu(1,7-octadiene)₁₋₄]SbF₆}₁₋ₚ, [Cu(1,5-cyclooctadiene)₂]SbF₆, [Cu(15-crown-5)]SbF₆, [Fe(15-crown-5)](SbF₆)₃, [Fe(18-crown-6)](SbF₆)₃, [Mg(15-crown-5)](SbF₆)₂, [Co(15-crown-5)](SbF₆)₂, [Ag(1R-(-)-nopol)₁₋₄]SbF₆}₋ₚ, [Ag(allylglycidylether)₁₋₄]SbF₆, {[Ag(trans, trans, cis-1,5,9-cyclododecatriene)₁₋₄]SbF₆}₁₋ₚ,
{[Ag(trans,trans,trans-1,5,9-cyclododecatriene)₁₋₄]SbF₆}₁₋ₚ,
{[Ag(cyclooctatetraene)₁₋₄]SbF₆}₁₋ₚ, {[Ag(squalene)₁₋₄]SbF₆}₁₋ₚ, and/or from any mixtures thereof, wherein p = 20,000,000,
and/or
the initiator according to formula (XVI) is selected from compounds according to formula (XVIII), 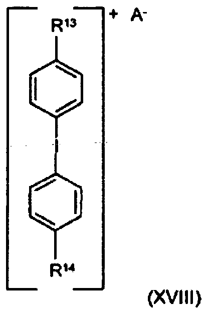 wherein R¹³ and R¹⁴ independently of each other are selected from the group consisting of hydrogen, methyl, ethyl, n-propyl, isopropyl, n-butyl, tert-butyl, Cl, Br, OCᵢH₂ᵢ₊₁, OCH₂CH(CH₃)CᵢH₂ᵢ₊₁, OCH₂CH(C₂H₅)CᵢH₂₊₁, OCH₂CH(OH)CiH₂ᵢ₊₁, OCH₂CO₂CᵢH₂ᵢ₊₁, OCH₂CH(CH₃)CO₂CᵢH₂ᵢ₊₁, OCH₂CH(C₂H₅)CO₂CᵢH₂ᵢ₊₁, and i is an integer between 0 and 18; and/or the initiator according to formula (XVII) is selected from compounds according to formula (XIX) and/or (XX), 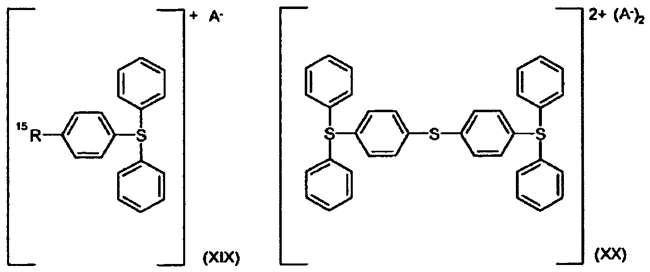 wherein R¹⁵ is selected from the group consisting of hydrogen, methyl, ethyl, n-propyl, isopropyl, n-butyl, tert-butyl, phenyl sulphide (PhS) and phenoxy (PhO).

12. The preparation according to at least one of claims 9 to 11, **characterized in that** a compound according to one of claims 3 to 7 to be used as a flame retardant is employed.

13. The use of a preparation according to claim 9 to 12, as an adhesive, a composite material, a sealant, a material and/or for coating surfaces.

14. A cured product, which is prepared by non-thermal curing of a preparation according to one of claims 9 to 12.

15. The cured product according to claim 14, **characterized in that** the product is a coating, a film, a material, a composite material, an adhesive and/or a sealing compound.

## Revendications

1. Utilisation d'au moins un composé de formule générale (I),
KA (I)
où K = un cation monophosphonium, diphosphonium, oligophosphonium et/ou polyphosphonium et A = un anion faiblement coordinant, l'anion A faiblement coordinant étant choisi parmi l'hexafluoroantimonate (SbF₆⁻), l'hexafluorophosphate (PF₆⁻), le borotétrafluorure (BF₄⁻), l'hexafluoroaluminate (AIF₆³⁻), le trifluorométhanesulfonate (CF₃SO₃⁻), l'hexafluoroarsénate (AsF₆⁻), le tétrakis(pentafluorophénylborate) (B[C₆F₅]₄⁻), le tétrakis[3,5-bis(trifluorométhyl)phényl]borate (B[C₆H₃(CF₃]₄⁻), le tétraphénylborate (B[C₆H₅]₄⁻), l'hexafluorotitanate (TiF₆²⁻) le pentachlorotitanate (TiCl₅⁻), le pentachlorostannate (SnCl₅⁻), l'hexafluorogermanate (GeF₆²⁻), l'hexafluorosilicate (SiF₆²⁻), l'hexafluoronickelate (NiF₆²⁻) ou l'hexafluorozirconate (ZrF₆²⁻) comme agent ignifuge pour les systèmes de résine.

2. Utilisation selon la revendication 1, caractérisée en ce le système de résine est un système de résine époxyde durcissable par voie non thermique.

3. Utilisation selon au moins l'une quelconque des revendications 1 ou 2, **caractérisée en ce que** le cation monophosphonium est choisi parmi les composés de formule générale (II) 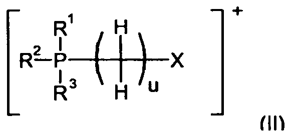 où u vaut un nombre entier entre 0 et 18, R¹, R² et R³ représentent, indépendamment l'un de l'autre, un groupe C₁₋₁₂-alkyle, cycloalkyle, alcényle, alcynyle, arylalkyle ou aryle, substitué ou non substitué, en particulier un groupe C₆₋₁₀-aryle et X représente un groupe C₁₋₁₂-alkyle, alcényle, cycloalkyle, arylalkyle, aryle, acide carboxylique ou ester d'acide carboxylique ou un groupe acyle de formule générale R⁴(C=O)-, où R⁴ = un groupe C₁₋₁₂-alkyle, cycloalkyle, arylalkyle ou aryle substitué ou non substitué.

4. Utilisation selon au moins l'une quelconque des revendications 1 ou 2, **caractérisée en ce que** le cation diphosphonium est choisi parmi les composés de formule générale (III) 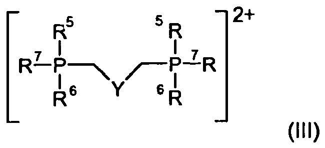 où R⁵ et R⁶ représentent, indépendamment l'un de l'autre, un groupe C₁₋₁₂-alkyle, cycloalkyle, alcényle, alcynyle, arylalkyle ou aryle, substitué ou non substitué, en particulier un groupe C₆₋₁₀-aryle, R⁷ représente un groupe C₁₋₁₂-alkyle, cycloalkyle, alcényle, alcynyle, arylalkyle ou aryle substitué ou non substitué ou une structure de formule générale R⁸C=O(CH₂)_{u'}-, où u' = 1 à 10 et R⁸ = C₁₋₁₂-alkyle, cycloalkyle, arylalkyle ou aryle substitué ou non substitué et Y représente une liaison covalente ou un groupe C₁₋₁₂-alkylène, cycloalkylène, alcénylène, arylalkylène ou arylène substitué ou non substitué.

5. Utilisation selon au moins l'une quelconque des revendications 1 ou 2, **caractérisée en ce que** le cation oligophosphonium ou polyphosphonium est choisi parmi les composés de formule générale (IV) 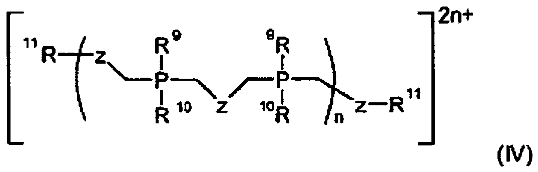 où n vaut un nombre entier entre 1 et 20 000 000, R⁹ et R¹⁰ représentent, indépendamment l'un de l'autre, un groupe C₁₋₁₂-alkyle, cycloalkyle, alcényle, alcynyle, arylalkyle ou aryle, substitué ou non substitué, en particulier un groupe C₆₋₁₀-aryle, Z représente une liaison covalente ou un groupe C₁₋₁₂-alkylène, cycloalkylène, alcénylène, arylalkylène ou arylène substitué ou non substitué et
R¹¹ représente une structure de formule générale (R¹²)₃P(CH₂)ⱼ-,j valant 0 à 10 et R¹² représentant un groupe C₁₋₁₂-alkyle, cycloalkyle, arylalkyle ou aryle substitué ou non substitué, en particulier un groupe C₆₋₁₀-aryle.

6. Utilisation selon au moins l'une quelconque des revendications 1 à 5, **caractérisée en ce que** l'agent ignifuge est choisi parmi les composés selon les formules (V) à (XII) 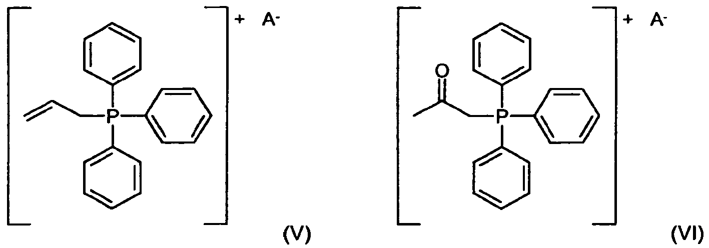 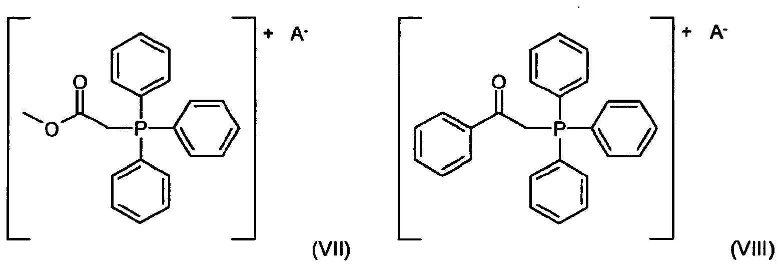 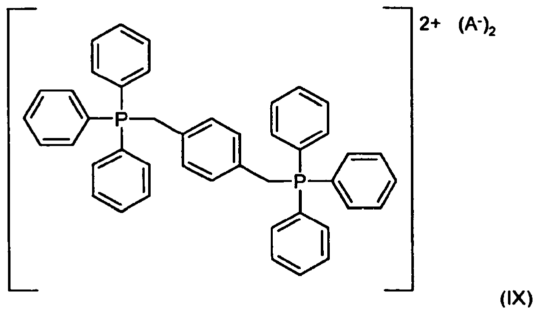 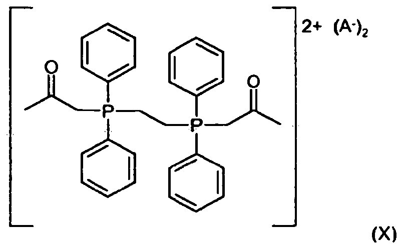 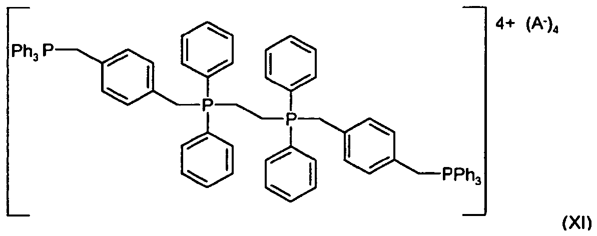 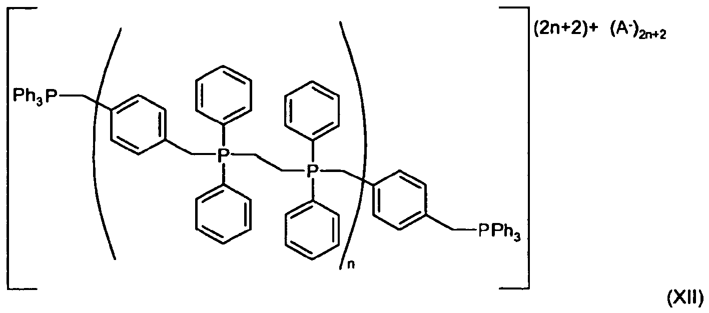 où n dans la formule (XII) vaut un nombre entier entre 1 et 20 000 000.

7. Utilisation selon au moins l'une quelconque des revendications 1 à 6, **caractérisée en ce que** l'anion A faiblement coordinant est l'hexafluoroantimonate (SbF₆⁻).

8. Cations diphosphonium, oligophosphonium ou polyphosphonium des composés selon les formules (X) à (XII) dans la revendication 6 et hexafluoroantimonates des composés selon les formules (VII), (X), (XI) et (XII) dans la revendication 6.

9. Composition durcissable, contenant
a) un système de résine époxyde,
b) un initiateur choisi parmi les composés suivants ou leurs mélanges :
i) composés de formule générale (XV)
{[M(L)ₐ]A_{b}}_{c} (XV),
où M = cation métallique, L = ligand, A = anion faiblement coordinant, a = 1 à 10, de préférence 1 à 6, de manière particulièrement préférée 1 à 4, b = 1 à 10, de préférence 1 à 6, de manière particulièrement préférée 1 à 3 et c = 1 à 20 000 000, de préférence 1 à 20 000, de manière particulièrement préférée 1 à 1000, de manière tout particulièrement préférée 1 à 500, en particulier 1 à 300, a, b et c pouvant représenter des nombres entiers et des plages de nombres et a pouvant en outre aussi représenter des nombres non entiers,
ii) composés de formule générale (XVI)
lA (XVI)
où I = sel de diaryliodonium et A = anion faiblement coordinant ou
iii) composés de formule générale (XVII)
SA (XVII)
où S = sel de triarylsulfonium et A = anion faiblement coordinant,
c) au moins un agent ignifuge de formule générale (I)
KA (I),
où K = un cation monophosphonium, diphosphonium, oligophosphonium et/ou polyphosphonium et A = un anion faiblement coordinant,
l'anion A faiblement coordinant de l'initiateur et de l'agent ignifuge étant choisi parmi l'hexafluoroantimonate (SbF₆⁻), l'hexafluorophosphate (PF₆⁻), le borotétrafluorure (BF₄⁻), l'hexafluoroaluminate (AIF6₃⁻), le trifluorométhanesulfonate (CF₃SO₃⁻), l'hexafluoroarsénate (AsF₆⁻), le tétrakis(pentafluorophénylborate) (B[C₆F₅]₄⁻), le tétrakis[3,5-bis(trifluorométhyl)phényl]borate (B[C₆H₃(CF₃)₂]₄⁻), le tétraphénylborate (B[C₆H₅]₄⁻), l'hexafluorotitanate (TiF6₂⁻), le pentachlorotitanate (TlCl₅⁻), le pentachlorostannate (SnCl₅⁻), l'hexafluorogermanate (GeF₆²⁻), l'hexafluorosilicate (SiF₆²⁻), l'hexafluoronickelate (NiF₆²⁻) ou l'hexafluorozirconate (ZrF₆²⁻).

10. Composition selon la revendication 9, **caractérisée en ce que** l'anion A faiblement coordinant de l'initiateur et/ou de l'agent ignifuge est l'hexafluoroantimonate (SbF₆⁻).

11. Composition selon au moins l'une quelconque des revendications 9 ou 10, **caractérisée en ce que** l'initiateur selon la formule (XV) est choisi parmi les composés
[Ag(cyclohexène)1-4]SbF₆, [Ag(cyclooctène)1-4]SbF₆, [Ag(cyclododécène)₁₋₄]SbF₆-,
[Ag(trans-2-octène)₁₋₄]SbF₆, [Ag(styrène)₁₋₄]SbF₆,
[Ag(acide 5-norbornène-2-carboxylique)₁₋₄]SbF₆, Ag(1,5-hexadiène)_{1-4]}SbF₆}₁₋ₚ,
{[Ag(1,7-octadiène)₁,₅]SbF₆}ₚ, {[Ag(1,7-octadiène)_{1,5}]SbF₆}1000, {[Ag(1,7-octadiène)₁,₅]SbF₆}₅₀₀,
{[Ag(1,9-décadiène)₁₋₄]SbF₆}₁₋ₚ, {[Ag(ester éthylique de l'acide sorbique)₁₋₄]SbF₆}₁₋ₚ,
[Ag(1,3-cyclohexadiène)₁₋₄]SbF₆}₁₋ₚ, {[Ag(1,3-cyclooctadiène)₁₋₄]SbF₆}₁₋ₚ,
Ag(1,5-cyclooctadiène)₂]SbF₆, {[Ag(norbornadiène)₁₋₄]SbF₆}₁₋ₚ,
{[Ag(dicyclopentadiène)_{1-4]}SbF₆}_{1-P}, [Ag(cycloheptatriène)₁₋₄]SbF₆}₁₋ₚ,
{[Cu(1,7-octadiène)₁₋₄]SbF₆}₁₋ₚ, [Cu(1,5-cyclooctadiène)₂]SbF₆, [Cu(15-couronne-5)[SbF₆,
[Fe(15-couronne-5)](SbF₆)₃, [Fe(18-couronne-6)](SbF₆)₃, [Mg(15-couronne-5)](SbF₆)₂, [Co(15-couronne-5)](SbF₆)₂, [Ag(1 R-(-)-Nopol)₁₋₄]SbF₆, [Ag (allylglycidyléther)₁₋₄]SbF₆,
{[Ag(trans,trans,cis-1,5,9-cyclododécatriène)₁₋₄]SbF₆}₁₋ₚ,
{[Ag(trans,trans,trans-1,5,9-cyclododécatriène)₁₋₄] SbF₆}₁₋ₚ,
{[Ag(cyclooctatétraène)_{1-4]}SbF₆}_{1-P}, {[Ag(squalène)_{1-4]}SbF₆}₁₋ₚ
et/ou parmi leurs mélanges quelconques, p = 20 000 000,
et/ou
l'initiateur selon la formule (XVI) est choisi parmi les composés selon la formule (XVIII), 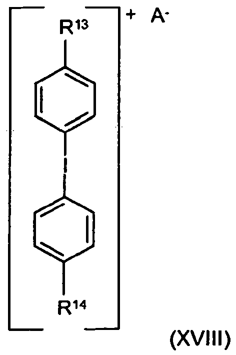 où R¹³ et R¹⁴ sont choisis, indépendamment l'un de l'autre, dans le groupe constitué par l'hydrogène, méthyle, éthyle, n-propyle, isopropyle, n-butyle, tert-butyle, Cl, Br, OCᵢH₂ᵢ₊₁, OCH₂CH(CH₃)CᵢH₂ᵢ₊₁, OCH₂CH(C₂H₅)CᵢH₂ᵢ₊₁, OCH₂CH(OH)CᵢH₂ᵢ₊₁, OCH₂CO₂CᵢH₂ᵢ₊₁, OCH(CH₃)CO₂CᵢH₂₊₁, OCH(C₂H₅)CO₂CᵢH₂ᵢ₊₁, et i représente un nombre entier entre 0 et 18 ;
et/ou
l'initiateur selon la formule (XVII) est choisi parmi les composés selon la formule (XIX) et/ou la formule (XX), 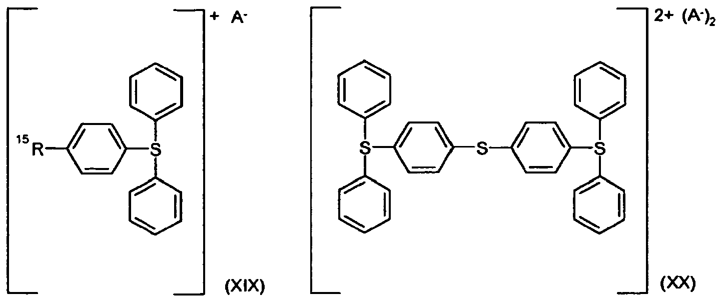 où R¹⁵ est choisi dans le groupe constitué par hydrogène, méthyle, éthyle, n-propyle, isopropyle, n-butyle, tert-butyle, phénylsulfure (PhS) et phénoxy (PhO).

12. Composition selon au moins l'une quelconque des revendications 9 à 11, **caractérisée en ce qu'**on emploie comme agent ignifuge un composé à utiliser selon l'une quelconque des revendications 3 à 7.

13. Utilisation d'une composition selon la revendication 9 à 12 comme adhésif, matériau composite, masse d'étanchéité, matière première et/ou pour le revêtement de surfaces.

14. Produit durci qui est préparé par un durcissement non thermique d'une composition selon l'une quelconque des revendications 9 à 12.

15. Produit durci selon la revendication 14, **caractérisé en ce que** le produit est un revêtement, un film, une matière première, un matériau composite, un adhésif et/ou une masse d'étanchéité.
